# EUROPEAN PATENT APPLICATION

(11) **EP 3 483 812 A1**
(43) Date of publication of application: **15.05.2019**
(21) Application number: 18205967.5
(22) Date of filing: 13.11.2018
(51) Int. Cl.: G06Q 20/20, G06Q 20/04, G06Q 20/28, G07G 3/00, G07G 1/00, G07G 1/14

(54) **CHECKOUT SYSTEM**

(30) Priority: 14.11.2017 JP 2017218742
(71) Applicant: Toshiba Tec Kabushiki Kaisha, Shinagawa-ku Tokyo 141-8562 (JP)
(72) Inventor: OKUMA, Yumiko, Shinagawa-ku,, Tokyo 141-8562 (JP); KAWATA, Kento, Shinagawa-ku,, Tokyo 141-8562 (JP)
(74) Representative: Fédit-Loriot

(57) **Abstract**

In accordance with an embodiment, the checkout system comprises a gate and a server. The gate comprises a commodity ID scanner for detecting commodity IDs of individual commodities one by one; a communication interface which transmits an inquiry about the commodity ID and receives a response to the inquiry; and a warning device which issues a warning when the response indicates that a commodity identified by the commodity ID is settled at a reduced tax rate. The server comprises a storage for storing whether the commodity is settled at a standard tax rate or the reduced tax rate for each commodity ID; and a communication interface which receives the inquiry and transmits the response indicating whether it is recorded that the commodity identified by the commodity ID included in the inquiry is settled at the standard tax rate or at the reduced tax rate in the storage.

## Description

### FIELD

The present invention relates to the field of a checkout processing technology in general, and embodiments described herein relate in particular to a checkout system.

### BACKGROUND

In Japan, it is considered to introduce a reduced tax rate system that applies a standard tax rate to eat-in restaurant and applies a reduced tax rate to takeout restaurant as a consumption tax. In the reduced tax rate system, in a restaurant having an eat-in space, the standard tax rate for a food restaurant is applied when a commodity is served for eating in the eat-in space, and a reduced tax is applied when the same commodity is served for takeout. In a conventional checkout terminal, although different consumption tax rates are set for different types of commodities, since sales registration of a commodity for which different tax rates are set depending on whether the commodity is for eating in or takeout cannot be performed, it is difficult to apply the reduced tax rate system to the commodity. A technology capable of changing a type of the consumption tax such as the standard tax rate or the reduced tax rate and performing sales registration is disclosed in Japanese Unexamined Patent Application Publication No. 2015-18153, which possibly reduces the difficulty thereof.

### SUMMARY OF INVENTION

To solve such problem, there is provided a checkout system, comprising a gate, and a server and a commodity ID scanner configured to detect commodity IDs of individual commodities one by one, wherein
the gate further comprises
a commodity ID scanner configured to detect commodity IDs of individual commodities one by one;
a first communication interface configured to transmit an inquiry about the commodity ID and to receive a response to the inquiry; and
a warning device configured to issue a warning when the response indicates that a commodity identified by the commodity ID is settled at a reduced tax rate, and not to issue a warning when the response indicates that a commodity identified by the commodity ID is settled at a standard tax rate, and
the server further comprises
a storage configured to store whether the commodity is settled at the standard tax rate or the reduced tax rate for each commodity ID; and
a second communication interface configured to receive the inquiry transmitted via the first communication interface and to transmit the response, to the first communication interface, indicating whether it is recorded that the commodity identified by the commodity ID included in the inquiry is settled at the standard tax rate or it is recorded that the commodity is settled at the reduced tax rate in the storage. Preferably, the checkout system further comprises a checkout terminal, wherein
the checkout terminal further comprises
a commodity ID scanner configured to detect commodity IDs of individual commodities one by one;
an ID scanner configured to detect an ID of a means carried by the customer other than the commodity;
a CPU configured to settle a commodity whose commodity ID is detected by the commodity ID scanner at the standard tax rate if the ID of the means carried by the customer other than the commodity is detected by the ID scanner, and to settle a commodity whose commodity ID is detected by the commodity ID scanner at the reduced tax rate if the ID of the means that the customer carries other than the commodity is not detected by the ID scanner; and
a third communication interface configured to transmit whether the commodity whose commodity ID is detected by the commodity ID scanner is settled at the standard tax rate or at the reduced tax rate to the server.

Preferably still, even in a case in which the ID scanner does not detect the ID of the means carried by the customer other than the commodity, if the commodity detected by the commodity ID scanner is not food, the CPU of the checkout terminal settles the commodity at the standard tax rate.

Preferably yet, the third communication interface of the checkout terminal transmits the ID of the means carried by the customer other than the commodity in association with the commodity ID of the commodity detected by the commodity ID scanner to the server.

Suitably, the means carried by the customer other than the commodity is a tray on which the commodity is placed.

The present invention also relates to a checkout method for a checkout system comprising a gate, a commodity ID scanner and a server, the method comprising:
detecting, by the commodity ID scanner, commodity IDs of individual commodities one by one;
transmitting, by the gate, an inquiry about the commodity ID
receiving, by the gate, a response to the inquiry;
issuing, by the gate, a warning when the response indicates that a commodity identified by the commodity ID is settled at a reduced tax rate,
not issuing, by the gate, a warning when the response indicates that a commodity identified by the commodity ID is settled at a standard tax rate,
storing, by the server, whether the commodity is settled at the standard tax rate or the reduced tax rate for each commodity ID,
receiving , by the server, the inquiry via the gate; and
transmitting the response indicating whether it is recorded that the commodity identified by the commodity ID included in the inquiry is settled at the standard tax rate or it is recorded that the commodity is settled at the reduced tax rate in the storage.

Preferably, the system further comprises a checkout terminal including the commodity ID scanner, the method further comprising:
detecting, by the checkout terminal, an ID of a means carried by the customer other than the commodity;
performing a settlement, by the checkout terminal, a commodity whose commodity ID is detected by the commodity ID scanner at the standard tax rate if the ID of the means carried by the customer other than the commodity is detected by the checkout terminal;
performing a settlement, by the checkout terminal, a commodity whose commodity ID is detected by the commodity ID scanner at the reduced tax rate if the ID of the means that the customer carries other than the commodity is not detected by the checkout terminal; and
transmitting, by the checkout terminal, whether the commodity whose commodity ID is detected by the commodity ID scanner is settled at the standard tax rate or at the reduced tax rate to the server.

Preferably still, the checkout method further comprises:
even in a case in which the checkout terminal does not detect the ID of the means carried by the customer other than the commodity, if the commodity detected by the commodity ID scanner is not food, performing the settlement, by the checkout terminal, at the standard tax rate.

Preferably yet, the checkout method further comprises:
transmitting, by the checkout terminal, the ID of the means carried by the customer other than the commodity in association with the commodity ID of the commodity detected by the commodity ID scanner to the server.

The present invention also concerns a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic plan view illustrating the inside of a retail store;
Fig. 2 is a perspective view illustrating an example of an eat-in space in the retail store;
Fig. 3 is a functional block diagram of a checkout system;
Fig. 4 is an example of a receipt;
Fig. 5 is an example of a drink ticket;
Fig. 6 is an example of a dish order ticket;
Fig. 7 is a functional block diagram of a store server;
Fig. 8 is a functional block diagram of a main register;
Fig. 9 is a functional block diagram of an eat-in register;
Fig. 10 is a functional block diagram of an eat-in gate;
Fig. 11 is a functional block diagram of a drink vendor;
Fig. 12 is a functional block diagram of an order terminal;
Fig. 13 is a functional block diagram of a kitchen terminal;
Fig. 14 is a functional block diagram of a table unit;
Fig. 15 is a flowchart depicting a processing executed by a CPU of the main register;
Fig. 16 is a flowchart depicting a processing executed by a CPU of the eat-in register;
Fig. 17 is a flowchart depicting a processing executed by a CPU of the eat-in gate;
Fig. 18 is a flowchart depicting a processing executed by a CPU of the drink vendor;
Fig. 19 is a flowchart depicting a processing executed by a CPU of the order terminal;
Fig. 20 is a flowchart depicting a processing executed by a CPU of the kitchen terminal;
Fig. 21 is a flowchart depicting a processing executed by a CPU of the main register relating to an operation by the kitchen terminal;
Fig. 22 is a flowchart depicting a processing executed by a CPU of the store server; and
Fig. 23 is a flowchart depicting a processing executed by the CPU of the store server.

### DETAILED DESCRIPTION

In accordance with an embodiment, a checkout system comprises a gate and a server. The gate comprises a commodity ID scanner configured to detect commodity IDs of individual commodities one by one; a communication interface configured to transmit an inquiry about the commodity ID and receive a response to the inquiry; and a warning device configured to issue a warning when the response indicates that a commodity identified by the commodity ID is settled at a reduced tax rate, and not to issue a warning when the response indicates that a commodity identified by the commodity ID is settled at a standard tax rate. The server comprises a storage configured to store whether the commodity is settled at the standard tax rate or the reduced tax rate for each commodity ID; and a communication interface configured to receive the inquiry and to transmit the response indicating whether it is recorded that the commodity identified by the commodity ID included in the inquiry is settled at the standard tax rate or it is recorded that the commodity is settled at the reduced tax rate in the storage.

An embodiment of a checkout system is described below with reference to the accompanying drawings.

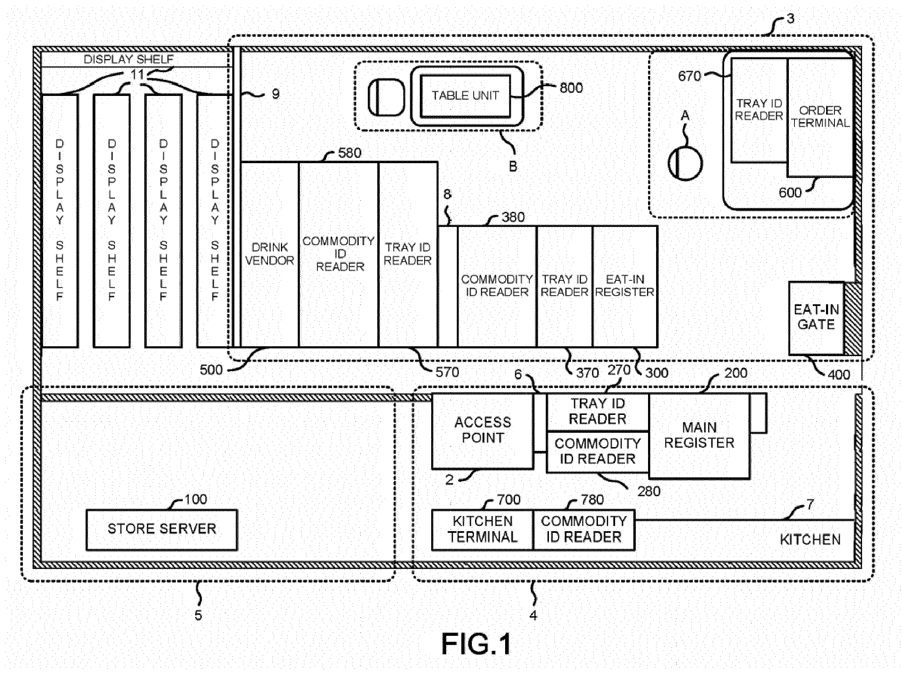

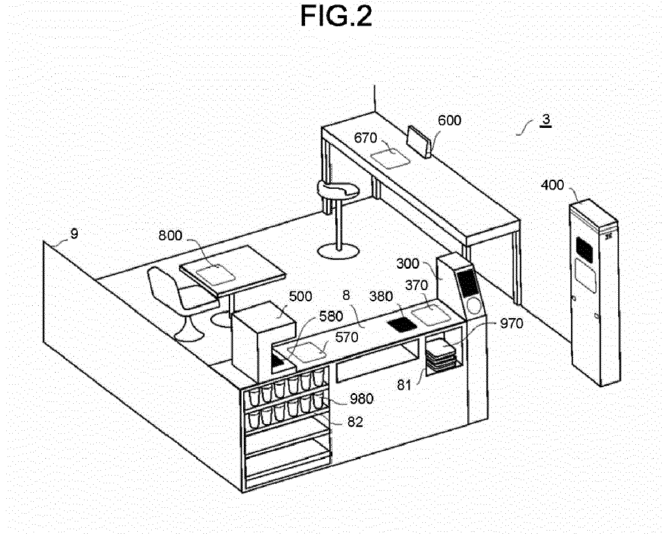

Fig. 1 is a schematic plan view illustrating the inside of a retail store which is an example of a layout of apparatuses constituting the checkout system according to an embodiment. Fig. 2 is a perspective view illustrating an example of an eat-in space in the retail store.

For example, in a retail store 1, in a direction in which a customer enters a gateway of the retail store 1, there is provided an eat-in space 3 on the right of a passage, a main register space 4 on the left of the passage, and a display shelf 11 on which a commodity is displayed in the right back corner through the passage.

The displayed commodity has a commodity ID tag for managing an individual commodity and has a commodity ID for the individual commodity. The commodity ID tag may be, for example, a so-called electronic tag.

Only one gateway to the eat-in space 3 is connected to the passage of the retail store 1, and a customer cannot directly leave the retail store from the eat-in space 3. In the eat-in space 3, there are a seat A which is a set of a chair A and a table A, and a seat B which is a set of a chair B and a table B.

The main register space 4 has a main register counter 6 on the passage side, and a kitchen 7 on a side opposite to the passage. On a store clerk side of the main register counter 6, there is a shelf on which a plurality of trays is stacked. The back of the main register space 4 is connected to a back office 5.

An eat-in register 300 and an eat-in gate 400 are arranged near the gateway of the eat-in space 3. There is a tray ID reader 370 and a commodity ID reader 380 on an upper surface of an eat-in service counter 8 next to the eat-in register 300. A plurality of trays 970 is stacked on a shelf 81 in the eat-in service counter 8.

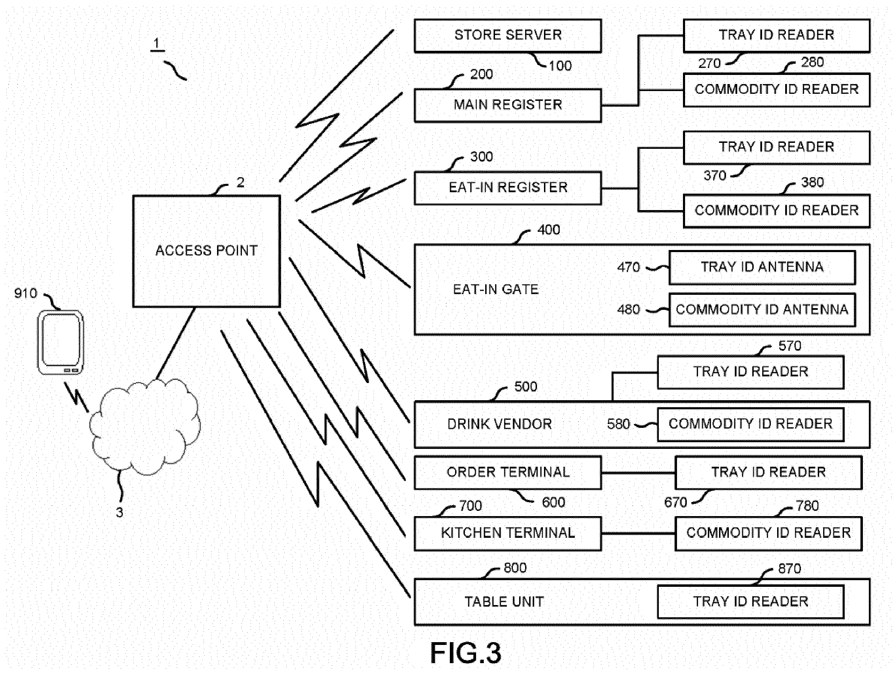

A plurality of cups 980 is stacked on a shelf 82 in the eat-in service counter 8. A drink vendor 500 is placed on an upper surface of the eat-in service counter 8 to be physically accessible from the inside and the outside of the eat-in space 3. The eat-in service counter 8 and a fence 9 separate the inside and the outside of the eat-in space 3 so that the customer can enter the eat-in space 3 only from the gateway of the eat-in space 3. Fig. 3 is a functional block diagram of the checkout system. The checkout system includes an access point 2, a store server 100, a main register 200 as a checkout terminal, a tray ID reader 270, a commodity ID reader 280, the eat-in register 300 as another checkout terminal, a tray ID reader 370, a commodity ID reader 380, the eat-in gate 400, the drink vendor 500, a tray ID reader 570, a commodity ID reader 580, an order terminal 600, a tray ID reader 670, a kitchen terminal 700, a commodity ID reader 780 and a table unit 800.

In the embodiment, a commodity ID reader and a commodity ID antenna, and a tray ID reader and a tray ID antenna, which are provided in each apparatus or connected to each apparatus, are separately described; however, if a reader with a single structure can read the commodity ID tag and the tray ID tag, the single reader capable of functioning as both the commodity ID reader and the tray ID reader may be used. The reader may be also used as a communication interface for non-contact settlement with an electronic money card and a terminal in addition to the commodity ID tag and the tray ID tag. Furthermore, a reader that can be used also as an interface for reading an electronic ticket may be used.

The access point 2 operates in an infrastructure mode as a so-called base station for forming a WLAN (Wireless Local Access Network) with devices in the retail store. The access point 2 may have a function of operating as a DHCP (Dynamic Host Configuration Protocol) server that assigns IP (Internet Protocol) addresses to the devices in the retail store.

The access point 2 may be a router functioning as a gateway for performing VPN (Virtual Private Network) communication with the Internet outside the retail store. For example, if the access point 2 is the router functioning as the gateway, or if the access point 2 can communicate with a network 3 outside the retail store via a device functioning as another gateway, a personal terminal 910 such as a smartphone owned by the customer can communicate with the devices in the retail store. The store server 100 may function as a DHCP server or a gateway, and the access point 2 may function as the access point of the WLAN in the retail store.

The store server 100 is a member of the WLAN for communication with the access point 2.

The store server 100 communicates with the main register 200, the eat-in register 300, the eat-in gate 400, the drink vendor 500, the order terminal 600, the kitchen terminal 700, the table unit 800 via the WLAN from the back office 5.

The store server 100 receives and stores information relating to sales registration results from the main register 200, the eat-in register 300 and the order terminal 600.

The store server 100 receives and stores a dish order from the main register 200, the eat-in register 300 and the order terminal 600, and transmits the dish order to the kitchen terminal 700.

The store server 100 receives an inquiry from the eat-in gate 400 and the drink vendor 500 and transmits a response.

The store server 100 receives and stores a tray ID from the order terminal 600 and the table unit 800.

The main register 200 is a member of the WLAN for communication with the access point 2.

The main register 200 communicates with the store server 100 via the WLAN from the main register counter 6.

The main register 200 communicates with the tray ID reader 270 near the main register 200 in a wired manner. The main register 200 communicates with the commodity ID reader 280 near the main register 200 in a wired manner.

The main register 200 is provided with an interface for performing a non-contact settlement using the electronic money.

The eat-in register 300 is a member of the WLAN for communication with the access point 2.

The eat-in register 300 communicates with the store server 100 via the WLAN from the vicinity of the gateway of the eat-in space 3.

The eat-in register 300 communicates with the tray ID reader 370 near the eat-in register 300 in a wired manner.

The eat-in register 300 communicates with the commodity ID reader 380 near the eat-in register 300 in a wired manner.

The eat-in register 300 has an interface for performing the non-contact settlement using the electronic money.

The eat-in gate 400 is a member of the WLAN for communication with the access point 2.

The eat-in gate 400 communicates with the store server 100 via the WLAN from the vicinity of the gateway of the eat-in space 3.

The eat-in gate 400 includes the tray ID reader 370.

The eat-in gate 400 includes the commodity ID reader 380.

The drink vendor 500 is a member of the WLAN for communication with the access point 2.

The drink vendor 500 communicates with the store server 100 via the WLAN from a position physically accessible from inside and outside of the eat-in space 3.

The drink vendor 500 communicates with the tray ID reader 570 near the drink vendor 500 in a wired manner.

The drink vendor 500 includes a commodity ID reader 580.

The order terminal 600 is a member of the WLAN for communication with the access point 2.

The order terminal 600 communicates with the store server 100 via the WLAN from the seat A in the eat-in space 3.

The order terminal 600 communicates with the tray ID reader 670 in a wired manner. The order terminal 600 has an interface for performing non-contact settlement using the electronic money.

The order terminal 600 and the tray ID reader 670 are installed on the table A in the seat A in the eat-in space 3.

The order terminal 600 is installed at a position where a customer can sit on the chair A and operate the order terminal 600, and the tray ID reader 670 is installed at a position where a tray ID can be read from a tray ID tag of a tray if the tray is placed on the table A.

The kitchen terminal 700 is a member of the WLAN for communication with the access point 2.

The kitchen terminal 700 communicates with the store server 100 via the WLAN from the kitchen 7 in the main register space 4.

The kitchen terminal 700 communicates with the commodity ID reader 780 near the kitchen terminal 700 in a wired manner.

The table unit 800 is a member of the WLAN for communication with the access point 2.

The table unit 800 communicates with the store server 100 via the WLAN from the seat B in the eat-in space 3.

The table unit 800 includes a tray ID reader 870.

The table unit 800 is installed on a table at the seat B in the eat-in space 3.

The order terminal 600 is installed at a position where a customer can sit on the chair B and operate the order terminal 600.

The tray ID reader 870 of the table unit 800 is installed at a position where a tray ID can be read from a tray ID tag of a tray if the tray is placed on the table B.

The operation is schematically described below with reference to a data table stored in the device.

Table 1 is an example of a variety master file stored in the store server 100.

**[Table 1]**

| variety ID | variety name | unit price | standard tax rate | reduced tax rate | commodity classification | provision form |
|---|---|---|---|---|---|---|
| ITM 01 | bean sprout | 120 | 10% | 8% | food | |
| ITM 02 | milk | 170 | 10% | 8% | food | |
| ITM 03 | iced coffee | 110 | 10% | 8% | food | drink vendor |
| ITM 04 | hot coffee | 100 | 10% | 8% | food | drink vendor |
| ITM 05 | yakisoba | 300 | 10% | 8% | food | kitchen |
| ITM 06 | firework set | 700 | 10% | 10% | general item | |
| ITM 07 | hot dog | 400 | 10% | 8% | food | kitchen |
| DSH 01 | cup | | | | | |
| DSH 02 | plate | | | | | |

The variety master file stores a variety ID, a variety name, a unit price, a standard tax rate, a reduced tax rate, a commodity classification, and a provision form in an associated manner. In Table 1, a "bean sprout" as a variety name, ¥120 as a unit price, 10% as a standard tax rate, 8% as a reduced tax rate, and "food" as a commodity classification are recorded in association with a variety ID "ITM 01". The provision form is not designated for the variety ID "ITM 01".

A "milk" as a variety name, ¥170 as a unit price, 10% as a standard tax rate, 8% as a reduced tax rate, and "food" as a commodity classification are recorded in association with a variety ID "ITM 02". The provision form is not designated for the variety ID "ITM 02".

An "iced coffee" as a variety name, ¥110 as a unit price, 10% as a standard tax rate, 8% as a reduced tax rate, "food" as a commodity classification, and "drink vendor" as a provision form are recorded in association with a variety ID "ITM 03".

A "hot coffee" as a variety name, ¥100 as a unit price, 10% as a standard tax rate, 8% as a reduced tax rate, "food" as a commodity classification, and "drink vendor" as a provision form are recorded in association with a variety ID "ITM 04".

A "yakisoba" as a variety name, ¥300 as a unit price, 10% as a standard tax rate, 8% as a reduced tax rate, "food" as a commodity classification, and "kitchen" as a provision form are recorded in association with a variety ID "ITM 05".

A "firework set" as a variety name, ¥700 as a unit price, 10% as a standard tax rate, 0.1 as a reduced tax rate, and a "general item" as a commodity classification are recorded in association with a variety ID "ITM 06". The provision form is not designated for the variety ID "ITM 06".

A "hot dog" as a variety name, ¥400 as a unit price, 10% as a standard tax rate, 8% as a reduced tax rate, "food" as a commodity classification, and "kitchen" as a provision form are recorded in association with a variety ID "ITM 07".

A "cup" as a variety name is associated with a variety ID "DSH 01". The unit price, the standard tax rate, the reduced tax rate, the commodity classification and the provision form are not designated for the variety ID "DSH 01".

A "plate" as a variety name is associated with a variety ID "DSH 02". The unit price, the standard tax rate, the reduced tax rate, the commodity classification and the provision form are not designated for the variety ID "DSH 02".

Table 2 is an example of a commodity ID-variety table stored in the store server 100.

**[Table 2]**

| commodity ID | variety ID |
|---|---|
| 13300 | ITM 01 |
| 13301 | ITM 01 |
| 13302 | ITM 01 |
| 20601 | ITM 02 |
| 20602 | ITM 02 |
| 20603 | ITM 02 |
| 44441 | ITM 06 |
| 44442 | ITM 06 |
| 99991 | DSH 01 |
| 99992 | DSH 01 |
| 99996 | DSH 02 |
| 99997 | DSH 02 |
| 99998 | DSH 02 |

The commodity ID-variety table stores a commodity ID and a variety ID in an associated manner. In Table 2, for example, a variety ID "ITM 01" is associated with a commodity ID "13300". An individual commodity attached with a commodity ID tag corresponding to the commodity ID "13300" is a variety identified by the variety ID "ITM 01", i.e., the variety name thereof is "bean sprout", the unit price is ¥120, the standard tax rate is 10%, the reduced tax rate is 8%, and the commodity classification is "food".

The devices for sales registration, such as the main register 200, the eat-in register 300 and the order terminal 600, also store copies of the variety master file and the commodity ID-variety table and synchronize them with the store server 100.

The operation of the main register 200 is schematically described below.

The store clerk in the main register 4 operates the main register 200 to perform sales registration of a commodity received from a customer present on the passage side and a received food order of dish and drink. The store clerk uses the commodity ID reader 280 to read the commodity ID of the commodity ID tag attached to the commodity to perform sales registration of the commodity. The store clerk inputs a food order with a touch panel display or a keyboard of the main register 200 to perform the sales registration of the food order.

Table 3 is an example of a temporary sales registration table stored in the main register 200.

**[Table 3]**

| tray ID | food order ID | commodity ID | variety ID |
|---|---|---|---|
| | | 13301 | ITM 01 |
| | | 13302 | ITM 01 |
| | | 20601 | ITM 02 |
| | ODR 01 | | ITM 03 |
| | ODR 02 | | ITM 05 |
| | | 44442 | ITM 06 |

The sales registration table stores a tray ID, a food order ID, a commodity ID and a variety ID in an associated manner. In Table 3, the variety ID "ITM 01" is associated with the commodity ID "13301". Neither tray ID nor food order ID is designated for the commodity ID "13301". The variety ID "ITM 01" is associated with a commodity ID "13302". Neither tray ID nor food order ID is designated for the commodity ID "13302". The variety ID "ITM 02" is associated with a commodity ID "20601". Neither tray ID nor food order ID is designated for the commodity ID "20601". The variety ID "ITM 03" is associated with the food order ID "ODR 01". Neither tray ID nor commodity ID is designated for the food order ID "ODR 01". The variety ID "ITM 05" is associated with the food order ID "ODR 02". Neither tray ID nor commodity ID is designated for the food order ID "ODR 02". The variety ID "ITM 062" is associated with a commodity ID "44442". Neither tray ID nor food order ID is designated for the commodity ID "44442".

If the customer requests a commodity for takeout, the store clerk can perform sales registration of the commodity received from the customer or a food order of dish and drink from the customer without reading the tray ID indicated by the tray ID tag attached to the tray using the tray ID reader 270.

All commodities on which the sales registration is performed are settled at a total amount applied with the tax rate for each type of the commodity. Foods on which the sales registration is performed are settled at a total amount applied with the reduced tax rate.

At the time of settlement, for the commodity ID of a commodity whose commodity classification associated with the variety ID that is not associated with the tray ID in the variety master file is "food" in the temporary sales registration table, the reduced tax rate in the variety master file is applied as an applicable tax rate, and the application is "reduced (food)". Otherwise, another tax rate in the variety master file is applied as an applicable tax rate for the commodity ID different from the above commodity ID.

Table 4 shows an example of a sales registration table stored in the main register 200.

**[Table 4]**

| tray ID | food order ID | commodity ID | variety ID | applicable tax rate | application |
|---|---|---|---|---|---|
| | | 13301 | ITM 01 | 8% | reduced (food) |
| | | 13302 | ITM 01 | 8% | reduced (food) |
| | | 20601 | ITM 02 | 8% | reduced (food) |
| | ODR 01 | | ITM 03 | 8% | reduced (food) |
| | ODR 02 | | ITM 05 | 8% | reduced (food) |
| | | 44442 | ITM 06 | 10% | standard |

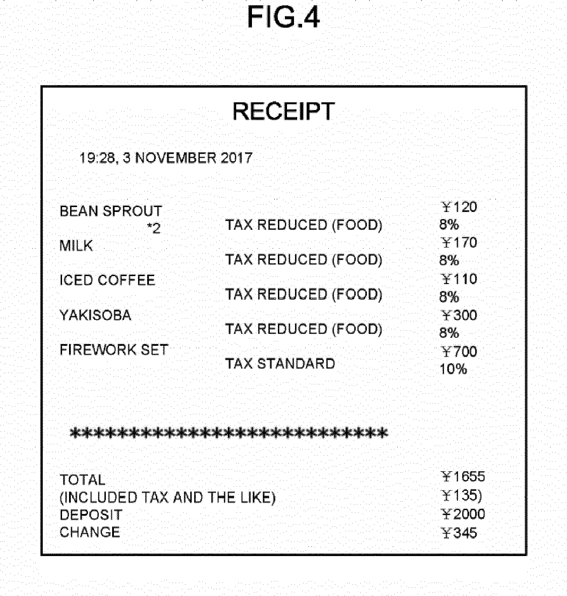

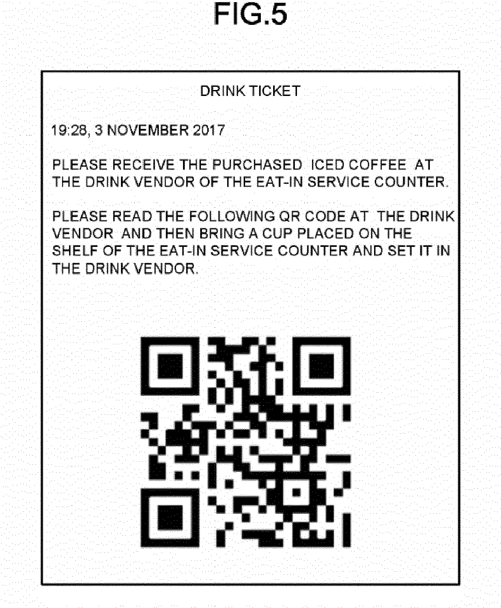

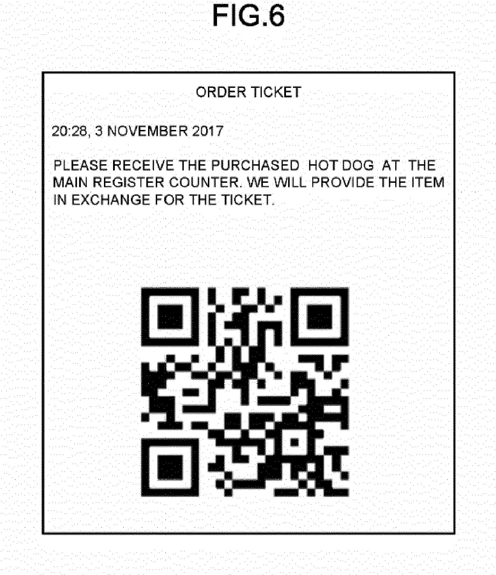

The sales registration table stores a tray ID, a food order ID, a commodity ID, an applicable tax rate and the application in an associated manner. In Table 4, the tray ID and the food order ID are not designated for the commodity ID "13301" associated with the variety ID "ITM 01" in the variety master file, wherein the variety ID "ITM 01" is associated with the variety name "bean sprout" whose unit price is ¥120 in the commodity ID-variety table. Since the commodity classification associated with the variety ID "ITM 01" in the variety master file is "food", wherein the variety ID "ITM 01" is not associated with the tray ID in the temporary sales registration table, the reduced tax rate 8% in the variety master file is applied as the applicable tax rate and "reduced (food)" is stored in the application. The tray ID and the food order ID are not designated for the commodity ID "13302" associated with the variety ID "ITM 01" in the variety master file, wherein the variety ID "ITM 01" is associated with the variety name "bean sprout" whose unit price is ¥120 in the commodity ID-variety table. Since the commodity classification associated with the variety ID "ITM 01" in the variety master file is "food", wherein the variety ID "ITM 01" is not associated with the tray ID in the temporary sales registration table, the reduced tax rate 8% in the variety master file is applied as the applicable tax rate and "reduced (food)" is stored in the application. The tray ID and the commodity ID are not designated for the food order ID "ODR 01" associated with the variety ID "ITM 03" in the variety master file which is associated with the variety name "iced coffee" and the unit price ¥110 in the commodity ID-variety table. Since the commodity classification associated with the variety ID "ITM 03" which is not associated with the tray ID in the variety master file is "food" in the temporary sales registration table, the reduced tax rate 8% in the variety master file is applied as the applicable tax rate and "reduced (food)" is stored in the application. The tray ID and the food order ID are not designated for the commodity ID "44442" associated with the variety ID "ITM 06" in the variety master file, wherein the variety ID "ITM 06" is associated with the variety name "firework set" whose unit price is ¥700 in the commodity ID-variety table. Since the commodity classification associated with the variety ID "ITM 06" in the variety master file is "general commodity", wherein the variety ID "ITM 06" is not associated with the tray ID in the temporary sales registration table, the standard tax rate 10% in the variety master file is applied as the applicable tax rate and "standard" is stored in the application. Fig. 4 shows an example of a receipt issued after settlement. On the receipt, one variety name "bean sprout" respectively associated with the commodity IDs "13301" and "13302" of the commodities having the same variety ID is collectively displayed, and the number of the commodity IDs is two. The variety name, the unit price, the total quantity, "reduced (food)" or "standard" as the applicable classification of the tax, and the applicable tax rate of the settled commodity or the food order are displayed. The store clerk hands over a ticket including the food order ID of dish and drink on which the sales registration is performed to the customer who performs the settlement. Fig. 5 shows an example of the ticket issued after settlement. Since the variety name is "iced coffee" and the provision form is "drink vendor" in the variety master file for the variety ID "ITM 03" associated with the food order ID "ODR 01" in the temporary sales registration table, a ticket is issued in a form after incorporating the variety name "iced coffee" for drink vendor. In this example, a multidimensional code indicating the food order ID "ODR 01" is printed on the ticket. Fig. 6 shows another example of the ticket issued after settlement. For example, if the variety ID "ITM 07" is associated with the food order ID "ODR 03" in the temporary sales registration table, the variety name is "hot dog" and the provision form is "kitchen" in the record associated with the variety ID "ITM 07" in the variety master file, and thus, a ticket is issued in a form after incorporating the variety name "hot dog" for kitchen. In this example, a multidimensional code indicating the food order ID "ODR 03" is printed on the ticket.

Various methods for handing over the ticket to the customer can be used in modern times.

For example, the store clerk may hand over a hard ticket printed on a medium such as a paper by a printer to the customer. An image of the ticket may be transmitted to the personal terminal 910 via the network. Data of the ticket may be transmitted to the personal terminal 910 via the network to form an image on an application of the personal terminal 910. The data of the ticket may be transmitted to the personal terminal 910 via the network to form an electronic ticket that can be read from the personal terminal 910 via non-contact communication.

The main register 200 transmits contents of the sales registration table including the food order ID of dish and drink on which the sales registration is performed to the store server 100. The store server 100 stores the contents of the sales registration table including the received food order ID as a part of sales registration result information.

If the customer requests a commodity for eat-in, the store clerk uses the tray ID reader 270 to read the tray ID of the tray ID tag attached to the tray before the settlement is completed.

Table 5 is an example of the temporary sales registration table stored in the main register 200 when the tray ID reader 270 reads the tray ID.

**[Table 5]**

| tray ID | food order ID | commodity ID | variety ID |
|---|---|---|---|
| T 01 | | 13301 | ITM 01 |
| T 01 | | 13302 | ITM 01 |
| T 01 | | 20601 | ITM 02 |
| T 01 | ODR 01 | | ITM 03 |
| T 01 | ODR 02 | | ITM 05 |
| T 01 | | 44442 | ITM 06 |

The difference between Table 5 and Table 3 is that the tray ID "T 01" is associated with the commodity ID or the food order ID in all records. In a series of the sales registration until settlement, the tray ID "T 01" is also associated with a record stored before the tray ID reader 270 reads the tray ID, and the tray ID "T 01" is also associated with a record stored after the tray ID reader 270 reads the tray ID.

Among the commodities received from the customer except for the food, the store clerk hands over a shopping bag in which commodities on which the sales registration is performed is put to the customer. The store clerk performs the sales registration on the food among the commodities received from the customer, and places the food on the tray and serves it to the customer. The store clerk performs sales registration on the food order of dish and drink received from the customer and then hands over the tray to the customer.

If the tray ID reader 270 does not read the tray ID before settlement, among the commodities on which the sales registration is performed, the food is settled at the total amount applied with the reduced tax rate. Among the commodities on which the sales registration is performed, the commodities other than the food are settled at the total amount applied with the tax rate for each type of the commodity. If the tray ID reader 270 reads the tray ID before settlement, among the commodities on which the sales registration is performed, the food is settled at the total amount applied with the standard tax rate. Among the commodities on which the sales registration is performed, the commodity other than the food is settled at the total amount applied with the tax rate for each type of the commodity. The term "food" referred to here is a food among commodities identified by the commodity IDs read by the commodity ID reader 280, or a food ordered in association with the food order ID among the commodities on which the sales registration is performed.

Table 6 is an example of the sales registration table stored in the main register 200 when the tray ID reader 270 reads the tray ID.

**[Table 6]**

| tray ID | food order ID | commodity ID | variety ID | applicable tax rate | application |
|---|---|---|---|---|---|
| T 01 | | 13301 | ITM 01 | 10% | standard (food) |
| T 01 | | 13302 | ITM 01 | 10% | standard (food) |
| T 01 | | 20601 | ITM 02 | 10% | standard (food) |
| T 01 | ODR 01 | | ITM 03 | 10% | standard (food) |
| T 01 | ODR 02 | | ITM 05 | 10% | standard (food) |
| T 01 | | 44442 | ITM 06 | 10% | standard |

Table 6 is different from Table 5 in that the tray ID "T 01" is associated with the commodity ID or the food order ID in all records, the applicable tax rate and the application of the food.

At the time of settlement, since the tray ID is associated with all the commodity IDs in the temporary sales registration table, for the commodity ID associated with the variety ID whose commodity classification in the variety master file is "food", the reduced tax rate of the variety master file is not applied but the standard tax rate as another tax rate is applied as the applicable tax rate, and "standard (food)" is stored in the application. The main register 200 transmits contents of the sales registration table to the store server 100, which include a combination of the tray ID read by the tray ID reader 270, and the commodity ID or the food order ID of dish and drink after the sales registration and the settlement in an associated manner. The store server 100 stores the contents of the sales registration table including the above association combination as a part of the sales registration result information. Since the store server 100 stores the food order ID of dish and drink after the sales registration and the settlement in association with the tray ID, if a tray attached with the tray ID tag corresponding to the tray ID is handed over to the customer, the tray ID becomes a substitute of the ticket containing the food order ID, and there is no need to issue the ticket. The customer passes through the gateway of the eat-in space 3 while carrying the tray on which the commodity, i.e., the food is placed.

The operation of the eat-in register 300 is schematically described.

The customer operates the eat-in register 300 to perform the sales registration on the commodity or the food order of dish and drink. The customer performs the sales registration on the commodity by reading the commodity ID of the commodity ID tag attached to the commodity using the commodity ID reader 380. The eat-in register 300 stores the tray ID, the food order ID, the commodity ID, the variety ID in an associated manner in the temporary sales registration table therein.

When the customer performs the sales registration for takeout, the customer uses the commodity ID reader 380 to read the commodity ID of the commodity ID tag attached to the commodity to perform sales registration of the commodity or input the food order of dish and drink without using the tray ID reader 370 to read the tray ID of the tray ID tag attached to the tray, and then settles the commodity using the electronic money. The customer receives a ticket having the food order ID of dish and drink settled by inputting the food order of dish and drink. All commodities after the sales registration are settled at the total amount applied with the tax rate for each type of the commodity. In other words, the food on which the sales registration is performed is settled at the total amount applied with the reduced tax rate.

At the time of settlement, for the commodity ID whose commodity classification associated with the variety ID that is not associated with the tray ID in the variety master file is "food" in the temporary sales registration table, the reduced tax rate in the variety master file is applied as the applicable tax rate, and "reduced (food)" is stored in the application. On the other hand, for other commodity IDs different from the above commodity ID, the other tax rate in the variety master file is applied as the applicable tax rate.

The eat-in register 300 stores the tray ID, the food order ID, the commodity ID, the applicable tax rate, and the application in an associated manner in the sales registration table therein.

The eat-in register 300 transmits contents of the sales registration table, which include the food order ID of dish and drink on which the sales registration is performed, to the store server 100. The store server 100 stores the received contents of the sales registration table including the food order ID as a part of the sales registration result information.

When the customer performs the sales registration for eating in, the customer uses the tray ID reader 370 to read the tray ID of the tray ID tag attached to the tray before the settlement is completed. The eat-in register 300 stores the tray ID acquired by the tray ID reader 370, the food order ID, the commodity ID, and the variety ID in an associated manner in the temporary sales registration table therein.

The customer performs commodity sales registration by reading the commodity ID of the commodity ID tag attached to the commodity with the commodity ID reader 380. The commodity on which the sales registration is performed may be put in the shopping bag or placed on the tray. The customer inputs the food order of dish and drink. After the sales registration is performed and the food order is input, the customer makes settlement using the electronic money. If the tray ID reader 370 does not read the tray ID before settlement, the food among the commodities on which the sales registration is performed is settled at a total amount applied with the reduced tax rate. Among the commodities on which the sales registration is performed, the commodities other than the food are settled at a total amount applied with the tax rate for each type of the commodity. If the tray ID reader 370 reads the tray ID before settlement, among the commodities on which the sales registration is performed, the food is settled at the total amount applied with the standard tax rate. Among the commodities on which the sales registration is performed, the commodities other than the food are settled at the total amount applied with the tax rate for each type of the commodity. The term "food" referred to here is a food among commodities identified by the commodity IDs read by the commodity ID reader 380, or a food ordered in association with the food order ID among the commodities on which the sales registration is performed. The eat-in register 300 stores the tray ID acquired by the tray ID reader 370, the food order ID, the commodity ID, the applicable tax rate and the application in an associated manner in the sales registration table therein.

The eat-in register 300 transmits the contents of the sales registration table to the store server 100, which include a combination of the tray ID read by the tray ID reader 370, the commodity ID and the food order ID after the sales registration and settlement in an associated manner. The store server 100 stores the contents of the sales registration table including the associated combination as a part of the sales registration result information. Since the store server 100 stores the food order ID of dish and drink after the sales registration and settlement in association with the tray ID, if the tray attached with the tray ID tag corresponding to the tray ID is handed over to the customer, the tray ID becomes a substitute of the ticket containing the food order ID, and there is no need to issue the ticket. The customer passes through the gateway of the eat-in space 3 while carrying the tray on which the commodity, i.e., the food is placed.

The operation of the eat-in gate 400 is schematically described.

The eat-in gate 400 starts scanning when it is detected that a customer enters the eat-in space 3 from the outside, and stops scanning when it is detected that the customer has entered the eat-in space 3 from the outside. While scanning, the eat-in gate 400 searches for the commodity ID of the commodity ID tag attached to a commodity and the tray ID of the tray ID tag attached to a tray that the customer brings to acquire the commodity ID and the tray ID. The eat-in gate 400 stops scanning when it is detected that the customer has entered the eat-in space 3 from the outside.

When the eat-in gate 400 can acquire the tray ID before the scanning is completed, the eat-in gate 400 transmits an eat-in inquiry including the tray ID and a commodity ID group acquired by the scanning to the store server 100. If the eat-in gate 400 cannot acquire the tray ID before the scanning is completed, the eat-in gate 400 transmits an eat-in inquiry including the commodity ID group acquired by the scanning to the store server 100.

Table 7 is an example of an eat-in registration table stored in the store server 100 after the tray ID is read by the tray ID reader 270 in the main register 200 and the settlement is completed for the eating in.

**[Table 7]**

| tray ID | commodity ID/food order ID |
|---|---|
| T 01 | 13301 |
| T 01 | 13302 |
| T 01 | 20601 |
| T 01 | ODR 01 |
| T 01 | ODR 02 |

An eat-in registration table stores the tray ID, the commodity ID or the food order ID in an associated manner. In Table 7, commodity IDs "13301", "13302", "20601", and food order IDs "ODR 01" and "ODR 02" are associated with the tray ID "T 01".

The store server 100 performs collation for determining whether the tray ID and the commodity ID included in the eat-in inquiry from the eat-in gate 400 are present in the eat-in registration table in which the tray ID stored in the store server 100 and the commodity ID after the sales registration and settlement are associated with each other. If the tray ID included in the eat-in inquiry and the commodity ID included in the eat-in inquiry are associated with each other in the eat-in registration table, the store server 100 transmits a collation success response. For example, in the case of Table 7, if the tray ID included in the eat-in inquiry is "T 01" and the commodity IDs are "13301", "13302" and "20601", the store server 100 transmits the collation success response. Even if a commodity ID that is not associated with the tray ID included in the eat-in inquiry in the eat-in registration table is contained in the eat-in inquiry, as long as the commodity identified by the commodity ID that is not associated with the tray ID is not food, the store server 100 transmits the collation success response. For example, in the case of Table 6 and Table 7, when the tray ID included in the eat-in inquiry is "T 01", and the commodity IDs are "13301" "13302" "20601" and "44442", since the variety corresponding to the commodity ID "44442" that is not included in the eat-in registration table is not food, and the other commodity IDs are associated with the tray ID in the eat-in registration table, the store server 100 transmits the collation success response.

If a commodity identified by a commodity ID that is not associated with the tray ID included in the eat-in inquiry is food, and the commodity ID that is not associated with the tray ID is included in the eat-in inquiry, the store server 100 transmits a collation failure response. For example, in the case of Table 7, if the tray ID included in the eat-in inquiry is "T 01", and the commodity IDs are "13301", "13302", "20601" and "20603", since there is the commodity ID "20603" associated with the variety ID "ITM 02" which is "milk", i.e., "food", the store server 100 transmits the collation failure response.

If the eat-in inquiry includes only the commodity IDs, and these commodity IDs are associated with any one of the tray IDs in the eat-in registration table, the store server 100 transmits the collation success response. The store server 100 transmits the collation failure response if the eat-in inquiry includes a commodity ID that is not associated with any one of tray IDs in the eat-in registration table.

If only the commodity IDs are included in the eat-in inquiry, and the commodity IDs are all associated with the tray ID of a tray placed on the seat A or the seat B in the eat-in space 3 in the eat-in registration table, the store server 100 transmits the collation success response.

If the collation failure response is received, the eat-in gate 400 issues a warning sound and turns on a warning lamp. The store server 100 stores the tray ID included in the eat-in inquiry contributing to the transmission of the collation success response.

The eat-in gate 400 may store a copy of the eat-in registration table, and synchronize it with the eat-in registration table of the store server 100. In this case, instead of transmitting the eat-in inquiry to the store server 100, the eat-in gate 400 can determine whether the collation fails or succeeds using the copy of the eat-in registration table stored by the eat-in gate 400.

The operation of the drink vendor 500 is schematically described.

The customer enables the ticket containing the food order ID of the drink to be read by the drink vendor 500.

Table 8 is an example of a drink vendor table stored in the drink vendor 500 immediately after the ticket is read.

**[Table 8]**

| food order ID | variety ID | commodity ID |
|---|---|---|
| ODR 01 | | |

The drink vendor table stores the food order ID, the variety ID, and the commodity ID in an associated manner. In Table 8, a record associated with the food order ID "ODR 01" is created, but there is no designation in other fields.

The drink vendor 500 transmits an order inquiry including the food order ID on the ticket to the store server 100.

The store server 100 transmits the collation failure response if no food order ID coincident with the food order ID received from the drink vendor 500 is included in the contents of the sales registration table stored as a part of the sales registration result information. If the collation failure response is received, the drink vendor 500 turns on the lamp.

The store server 100 transmits the collation success response including the variety ID associated with the food order ID if the food order ID coincident with the food order ID received from the drink vendor 500 is included in the contents of the sales registration table stored as a part of the sales registration result information.

Table 9 is an example of the drink vendor table immediately after receiving the collation success response.

**[Table 9]**

| food order ID | variety ID | commodity ID |
|---|---|---|
| ODR 01 | ITM 03 | |

In Table 9, the variety ID "ITM 03" of the iced coffee included in the collation success response is associated with the record associated with the food order ID "ODR 01".

When the customer takes out a cup from a shelf 82 in the eat-in service counter 8 and sets it in the drink vendor 500, the commodity ID reader 580 reads the commodity ID of the commodity ID tag attached to the cup, and the drink ordered with the main register 100, the eat-in register 200 or the order terminal 600 is injected. Table 10 is an example of the drink vendor table immediately after the commodity ID reader 580 reads the commodity ID attached to the cup.

**[Table 10]**

| food order ID | variety ID | commodity ID |
|---|---|---|
| ODR 01 | ITM 03 | 99991 |

In Table 10, the commodity ID "99991" of the cup is associated with the record including the variety ID "ITM 03" of the iced coffee and the food order ID "ODR 01". The drink vendor 500 transmits the contents of the drink vendor table to the store server 100, and the store server 100 reflects the associated combination in the eat-in registration table.

Table 11 is an example of a record in the eat-in registration table in which the contents of the drink vendor table received from the drink vendor 500 are reflected after the state of Table 7.

**[Table 11]**

| tray ID | commodity ID/food order ID |
|---|---|
| T 01 | 13301 |
| T 01 | 13302 |
| T 01 | 20601 |
| T 01 | 99991 |
| T 01 | ODR 02 |

In the state of Table 7, the commodity ID "99991" of the cup associated with the food order ID "ODR 01" in the drink vendor table received from the drink vendor 500 is overwritten and updated in the commodity ID / food order ID field of a record associated with the food order ID "ODR 01" for the tray ID "T 01". Since the commodity ID "99991" of the cup is associated with the tray ID "T 01", the customer can bring the cup with the commodity ID "99991" and pass through the eat-in gate 400. The operation of the order terminal 600 is schematically described.

The customer enables the tray ID of the tray ID tag attached to the tray that the customer brings to the eat-in space 3 to be read by the tray ID reader 670 of the seat A. Since the tray ID reader 670 is installed at a position where the tray ID can be read from the tray ID tag attached to the tray placed on the table A, the customer can enable the tray ID to be read by the tray ID reader 670 without particular consciousness.

If the tray ID reader 670 cannot read the tray ID, the order terminal 600 does not receive the input of the food order. If the tray ID reader 670 reads the tray ID, the order terminal 600 receives the input of the food order.

The customer inputs the food order of dish and drink to the order terminal 600 installed in the table A of the seat A on which the tray is placed. The order terminal 600 stores the tray ID, the food order ID, and the variety ID in an associated manner in the temporary sales registration table therein. After inputting the food order, the customer makes settlement using the electronic money. The ordered food is settled at a total amount applied with the standard tax rate. The order terminal 600 stores the tray ID, the food order ID, the applicable tax rate and the application in an associated manner in the sales registration table therein. The order terminal 600 issues a ticket having the food order ID of dish and drink ordered by the customer to the customer. The order terminal 600 transmits the contents of the sales registration table, which include a combination in which the food order ID of each ordered food is associated with the tray ID of the order terminal 600, to the store server 100. The store server 100 stores the received contents of the sales registration table as a part of the sales registration result information.

The customer goes to the main register 200 while setting the tray on the table A of the seat A, hands over the ticket to the store clerk and receives the dish from the store clerk. Before that, the kitchen terminal 700 transmits the commodity ID of tableware filled with the received dish to the store server 100 in association with the food order ID. The store server 100 receiving the commodity ID stores the tray ID associated with the food order ID in association with the commodity ID of the tableware. Even if the customer enters the eat-in space 3 from the outside while bringing the tableware without the tray, since the store server 100 stores the commodity ID of the tableware and the tray ID in an associated manner, the collation success response is transmitted, and the customer can return to the seat A in the eat-in space 3 without being warned by the eat-in gate 400.

The operation of the kitchen terminal 700 is schematically described.

If the store server 100 receives the food order ID of dish and drink from the main register 200, the eat-in register 300 or the order terminal 600, the store server 100 transmits a food order record in which the food order ID and the variety ID are associated with each other to the kitchen terminal 700. The kitchen terminal 700 shows the type of dish associated with the variety ID in the food order record received from the store server 100 to the store clerk. In the kitchen 7, the store clerk cooks the dish indicated by the kitchen terminal 700.

Table 12 is an example of the kitchen table stored in the kitchen terminal 700 immediately after receiving the food order record from the store server 100.

**[Table 12]**

| food order ID | variety ID | commodity ID | cooking completion flag |
|---|---|---|---|
| ODR 02 | ITM 05 | | |

The kitchen table stores the food order ID, the variety ID, the commodity ID, and a cooking completion flag in an associated manner. In Table 12, the variety ID "ITM 05" of yakisoba is associated with the record associated with the food order ID "ODR 02", but there is no designation in other fields.

The store clerk places the dish on tableware attached with a commodity ID tag. When the store clerk finishes cooking the dish, the store clerk registers completion of cooking for the dish on the kitchen terminal 700. The store clerk uses the commodity ID reader 780 to read the commodity ID tag attached to the tableware filled with the dish until the cooking completion registration is performed.

Table 13 is an example of the kitchen table stored in the kitchen terminal 700 immediately after the commodity ID reader 780 has read the commodity ID tag attached to the tableware and the cooking completion registration is performed.

**[Table 13]**

| food order ID | variety ID | commodity ID | cooking completion flag |
|---|---|---|---|
| ODR 02 | ITM 05 | 99997 | completion |

The food order ID "ODR 02" of yakisoba is also associated with the commodity ID "99997" of the tableware read by the commodity ID reader 780 and a "completion" set in the cooking completion flag which indicates that the cooking completion registration is already performed.

The kitchen terminal 700 transmits, to the store server 100, a record of the kitchen table including a combination in which the food order ID of the dish and the commodity ID of the tableware filled with the dish. The store server 100 reflects the associated combination in the eat-in registration table.

The store clerk receives the ticket from the customer and makes the main register 200 recognize the food order ID of the ticket.

The store clerk receives the tray from the customer, and uses the tray ID reader 270 to read the tray ID of the tray ID tag attached to the tray.

The main register 200 displays the dish associated with the food order ID on the ticket or the food order ID associated with the tray ID. The main register 200 also displays whether or not the completion of cooking of the dish is already registered. The store clerk serves the dish to the customer if the completion of cooking of the dish is already registered.

Table 14 is an example of a record in the eat-in registration table in which the contents of the kitchen table received from the kitchen terminal 700 are reflected after the state of Table 11.

**[Table 14]**

| tray ID | commodity ID/food order ID |
|---|---|
| T 01 | 13301 |
| T 01 | 13302 |
| T 01 | 20601 |
| T 01 | 99991 |
| T 01 | 99997 |

In the state of Table 11, the commodity ID "99997" of a plate associated with the food order ID "ODR 02" in the kitchen table received from the kitchen terminal 700 is overwritten and updated in the commodity ID / food order ID field of a record associated with the food order ID "ODR 02" for the tray ID "T 01". Since the commodity ID "99997" of the plate is associated with the tray ID "T 01", the customer can bring the plate with the commodity ID "99997" and pass through the eat-in gate 400.

The operation of the table unit 800 is schematically described.

When the tray ID reader 270 reads the tray ID of the tray ID tag attached to the tray, the main register 200 transmits a vacant seat inquiry to the store server 100.

When the tray ID reader 370 reads the tray ID of the tray ID tag attached to the tray, the eat-in register 300 transmits a vacant seat inquiry to the store server 100.

If the vacant seat inquiry is received from the main register 200 or the eat-in register 300, the store server 100 transmits a tray ID inquiry to the order terminal 600 or the table unit 800.

The order terminal 600 receiving the tray ID inquiry confirms whether or not the tray ID can be detected by the tray ID reader 670. The order terminal 600 responds to the store server 100 about whether the tray ID can be detected.

The table unit 800 receiving the tray ID inquiry confirms whether or not the tray ID can be detected. The table unit 800 responds to the store server 100 about whether the tray ID can be detected.

The store server 100 determines whether or not a response indicating that the tray ID cannot be detected is included in the response to the tray ID inquiry which is received from the order terminal 600 or the table unit 800, and transmits the determination result as a response to the vacant seat inquiry. That the tray ID cannot be detected means that no tray is placed in the seat and the seat is vacant. On the other hand, that all the responses of the tray ID inquiry indicate that the tray ID can be detected means that there is a tray in each seat, and there is no vacant seat.

The main register 200 or the eat-in register 300 displays a message indicating there is no vacant seat if a full occupancy response indicating that the tray ID is detected in both seat A and seat B in the eat-in space 3 is received from the store server 100 as a result of the vacant seat inquiry.

The main register 200 or the eat-in register 300 displays a message indicating there is a vacant seat if a vacant seat response indicating that the tray ID is detected in the seat A but no tray ID is detected in the seat B in the eat-in space 3 is received from the store server 100 as a result of the vacant seat inquiry.

The configuration of each apparatus is described below.

The configuration of the store server 100 is described.

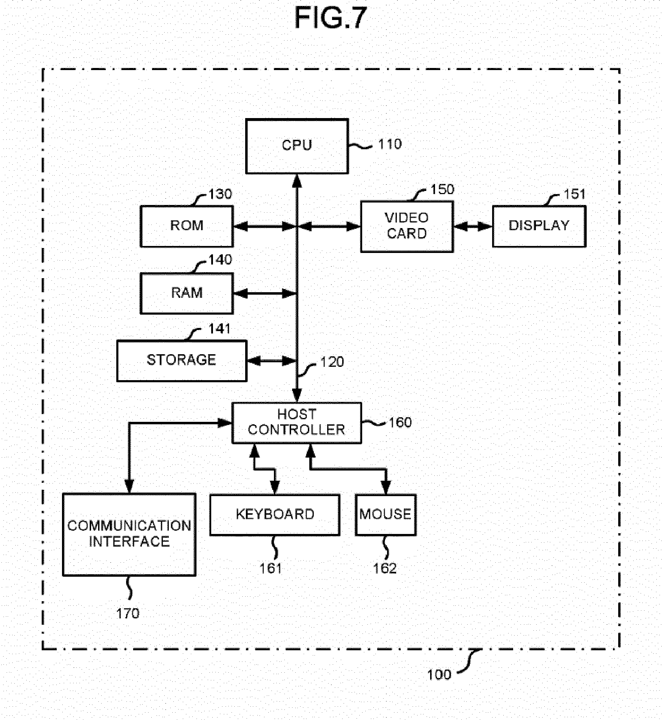

Fig. 7 is a functional block diagram of the store server 100.

The store server 100 is provided with a CPU (Central Processing Unit) 110.

The CPU 110 communicates with a ROM (Read Only Memory) 130, a RAM (Random Access Memory) 140, a storage 141, a video card 150 and a host controller 160 via a bus line 120.

The ROM 130 stores programs to be executed by the CPU 110 and data necessary for the CPU 110 to execute the programs.

The RAM 140 stores temporary data and the like when the CPU 110 executes the programs.

The CPU 110 displays an image on a display 151 via the video card 150.

The CPU 110 receives an input from a person through a keyboard 161 and a mouse 162 via the host controller 160.

The CPU 110 controls a communication interface 170 via the host controller 160 to wirelessly communicate with the access point 2 to configure the WLAN.

The configuration of the main register 200 is described.

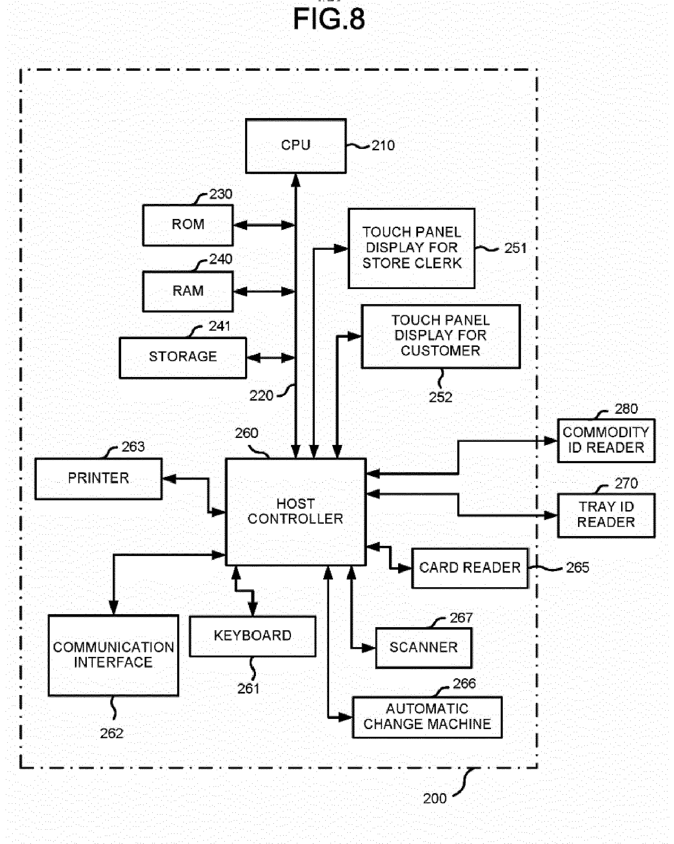

Fig. 8 is a functional block diagram of the main register 200.

The main register 200 is provided with a CPU 210.

The CPU 210 communicates with a ROM 230, a RAM 240 and a host controller 260 via a bus line 220.

The ROM 230 and a storage 241 store programs to be executed by the CPU 210 and data necessary for the CPU 210 to execute the programs.

The RAM 240 temporarily stores data and the like when the CPU 210 executes the programs.

The CPU 210 displays an image on a touch panel display for store clerk 251. The CPU 210 receives an input from a store clerk via the touch panel display for store clerk 251. The CPU 210 displays an image on a touch panel display for customer 252. The CPU 210 receives an input from the customer via the touch panel display for customer 252. The CPU 210 receives an input from a store clerk through a keyboard 261 via the host controller 260.

The CPU 210 controls a communication interface 262 via the host controller 260 to wirelessly communicate with the access point 2 to configure the WLAN.

The CPU 210 communicates with the tray ID reader 270 via the host controller 260 to acquire the tray ID of the tray ID tag attached to the tray.

The CPU 210 communicates with the commodity ID reader 280 via the host controller 260 to acquire the commodity ID of the commodity ID tag attached to the commodity. The CPU 210 communicates with a card reader 265 via the host controller 260 to communicate with an electronic money card or a terminal for non-contact settlement. The CPU 210 communicates with an automatic change machine 266 via the host controller 260 to receive bills and coins for cash settlement.

The CPU 210 communicates with the scanner 267 via the host controller 260 to acquire the food order ID on the ticket.

The CPU 210 issues a print command to a printer 263 via the host controller 260 to print a settlement result on a receipt or to print a ticket including the food order ID of dish and drink.

The configuration of the eat-in register 300 is described.

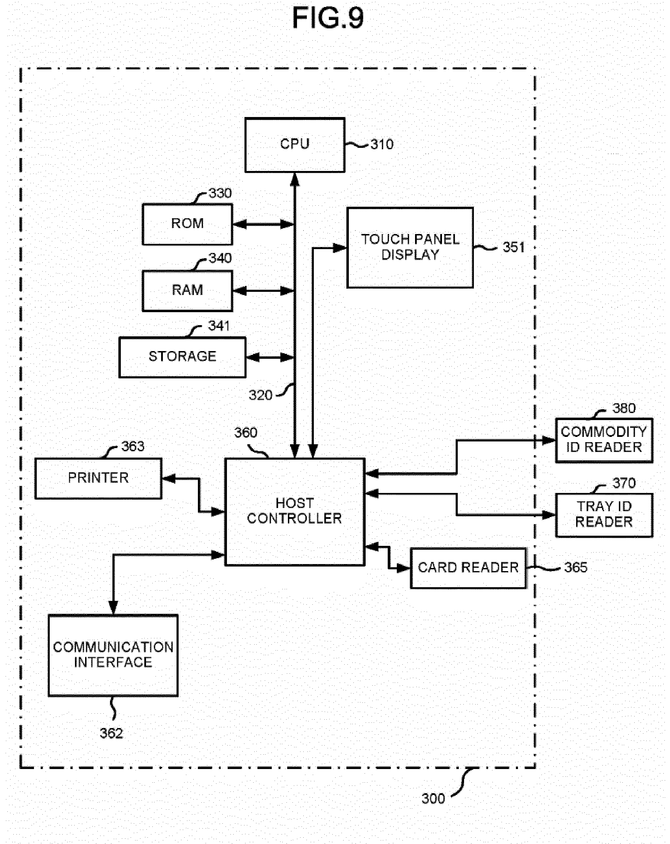

Fig. 9 is a functional block diagram of the eat-in register 300.

The eat-in register 300 is provided with a CPU 310.

The CPU 310 communicates with a ROM 330, a RAM 340, and a host controller 360 via a bus line 320.

The ROM 330 and a storage 341 store programs to be executed by the CPU 310 and data necessary for the CPU 310 to execute the programs.

The RAM 340 temporarily stores data and the like when the CPU 310 executes the programs.

The CPU 310 displays an image on a touch panel display 351. The CPU 310 receives an input from the customer via the touch panel display 351.

The CPU 310 controls a communication interface 362 via the host controller 360 to wirelessly communicate with the access point 2 to configure the WLAN.

The CPU 310 issues a print command to a printer 363 via the host controller 360 to print a settlement result on a receipt or to print a ticket having the food order ID of dish and drink.

The CPU 310 communicates with the tray ID reader 370 via the host controller 360 to acquire the tray ID of the tray ID tag attached to the tray.

The CPU 310 communicates with the commodity ID reader 380 via the host controller 360 to acquire the commodity ID of the commodity ID tag attached to the commodity. The CPU 310 communicates with the card reader 365 via the host controller 360 to communicate with the electronic money card or a terminal for non-contact settlement.

The configuration of the eat-in gate 400 is described.

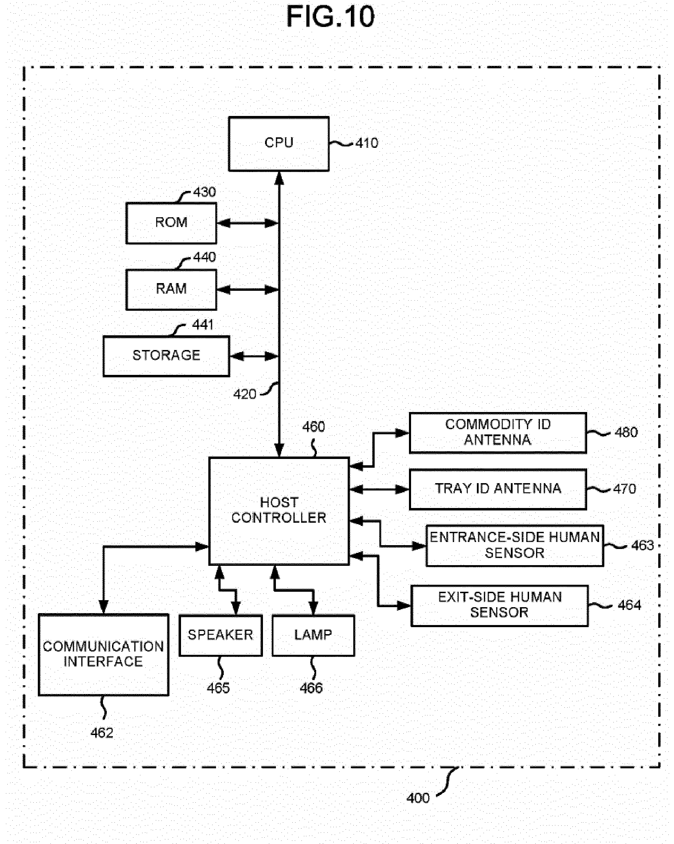

Fig. 10 is a functional block diagram of the eat-in gate 400.

The eat-in gate 400 is provided with a CPU 410.

The CPU 410 communicates with a ROM 430, a RAM 440 and a host controller 460 via a bus line 420.

The ROM 430 and a storage 441 store programs to be executed by the CPU 410 and data necessary for the CPU 410 to execute the programs.

The RAM 440 stores temporary data or the like when the CPU 410 executes the programs.

The CPU 410 controls a communication interface 462 via the host controller 460 to wirelessly communicate with the access point 2 to configure the WLAN.

The CPU 410 acquires detection states of an entrance-side human sensor 463 and an exit-side human sensor 464 that detect the presence of the customer passing through the gateway of the eat-in space 3 via the host controller 460. The eat-in gate 400 has the entrance-side human sensor 463 closer to the outside of the eat-in space 3, and the exit-side human sensor 464 closer to the inside of the eat-in space 3. When a customer enters the eat-in space 3, the entrance-side human sensor 463 first detects the customer who passes through the gateway of the eat-in space 3 from the outside to the inside of the eat-in space 3, and then the exit-side human sensor 464 detects the customer. When a customer leaves the eat-in space 3, the exit-side human sensor 464 first detects the customer who passes through the gateway of the eat-in space 3 from the inside to the outside of the eat-in space 3, and then the entrance-side human sensor 463 detects the customer.

The CPU 410 controls a speaker 465 as a warning device to emit sound or turns on a lamp 466 via the host controller 460.

The CPU 410 communicates with a tray ID antenna 470 via the host controller 460 to acquire the tray ID of the tray ID tag attached to the tray.

The CPU 410 communicates with a commodity ID antenna 480 via the host controller 460 to acquire the commodity ID of the commodity ID tag attached to the commodity. The configuration of the drink vendor 500 is described.

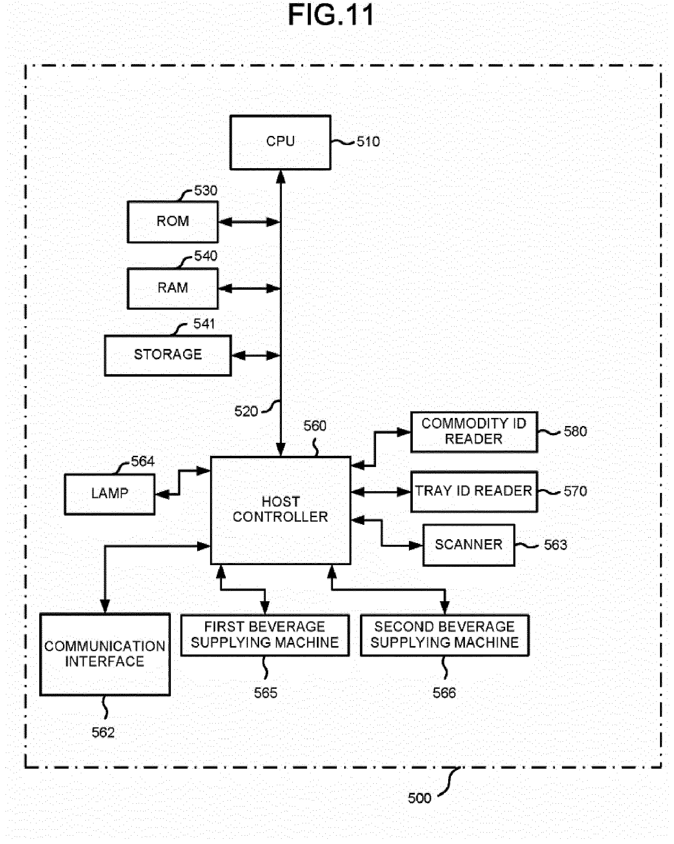

Fig. 11 is a functional block diagram of the drink vendor 500.

The drink vendor 500 is provided with a CPU 510.

The CPU 510 communicates with a ROM 530, a RAM 540, and a host controller 560 via a bus line 520.

The ROM 530 and a storage 541 store programs to be executed by the CPU 510 and data necessary for the CPU 510 to execute the programs. The storage 541 stores a drink variety table in which a beverage supplying machine and a variety ID are associated with each other. For example, in the drink variety table, a first beverage supplying machine 565 is associated with the variety ID "ITM 03" of the iced coffee discharged from the first beverage supplying machine 565, and the second beverage supplying machine 566 is associated with the variety ID "ITM 04" of the hot coffee discharged from the second beverage supplying machine 566.

The RAM 540 stores temporary data and the like when the CPU 510 executes the programs.

The CPU 510 controls a communication interface 562 via the host controller 560 to wirelessly communicate with the access point 2 to configure the WLAN.

The CPU 510 communicates with a scanner 563 via the host controller 560 to acquire the food order ID on the ticket.

The CPU 510 turns on a lamp 564 via the host controller 560.

The CPU 510 controls the first beverage supplying machine 565 and the second beverage supplying machine 566 to discharge drink via the host controller 560. The first drink supplying machine 565 and the second drink supplying machine 566 each discharge one cup of drink every time they receive a discharge command from the CPU 510. The first beverage supplying machine 565 discharges the drink different from the second beverage supplying machine 566. For example, the first beverage supplying machine 565 discharges the iced coffee, and the second beverage supplying machine 566 discharges the hot coffee.

The CPU 510 communicates with a tray ID reader 570 via the host controller 560 to acquire the tray ID of the tray ID tag attached to the tray.

The CPU 510 communicates with a commodity ID reader 580 via the host controller 560 to acquire the commodity ID of the commodity ID tag attached to the commodity. The configuration of the order terminal 600 is described.

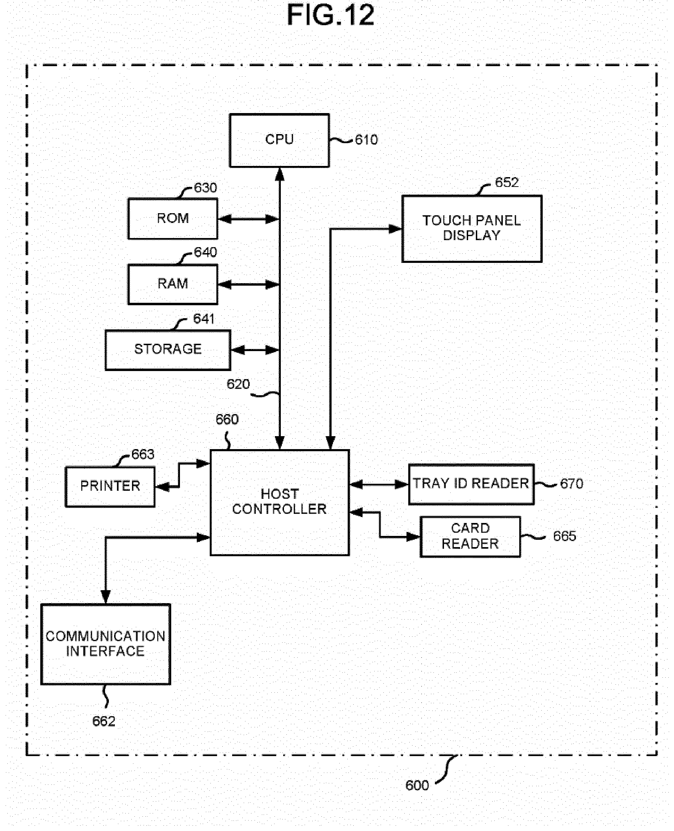

Fig. 12 is a functional block diagram of the order terminal 600.

The order terminal 600 is provided with a CPU 610.

The CPU 610 communicates with a ROM 630, a RAM 640 and a host controller 660 via a bus line 620.

The ROM 630 and a storage 641 store programs to be executed by the CPU 610 and data necessary for the CPU 610 to execute the programs.

The RAM 640 stores temporary data and the like when the CPU 610 executes the programs.

The CPU 610 displays an image on a touch panel display 652. The CPU 610 receives an input from the customer via the touch panel display 652.

The CPU 610 controls a communication interface 662 via the host controller 660 to wirelessly communicate with the access point 2 to configure the WLAN.

The CPU 610 issues a print command to a printer 663 via the host controller 660 to print a settlement result on a receipt or to print a ticket containing the food order ID of dish and drink.

The CPU 610 communicates with a card reader 665 via the host controller 660 to communicate with the electronic money card or the terminal for non-contact settlement. The CPU 610 communicates with the tray ID reader 670 via the host controller 660 to acquire the tray ID of the tray ID tag attached to the tray.

The configuration of the kitchen terminal 700 is described.

The configuration of the kitchen terminal 700 is described.

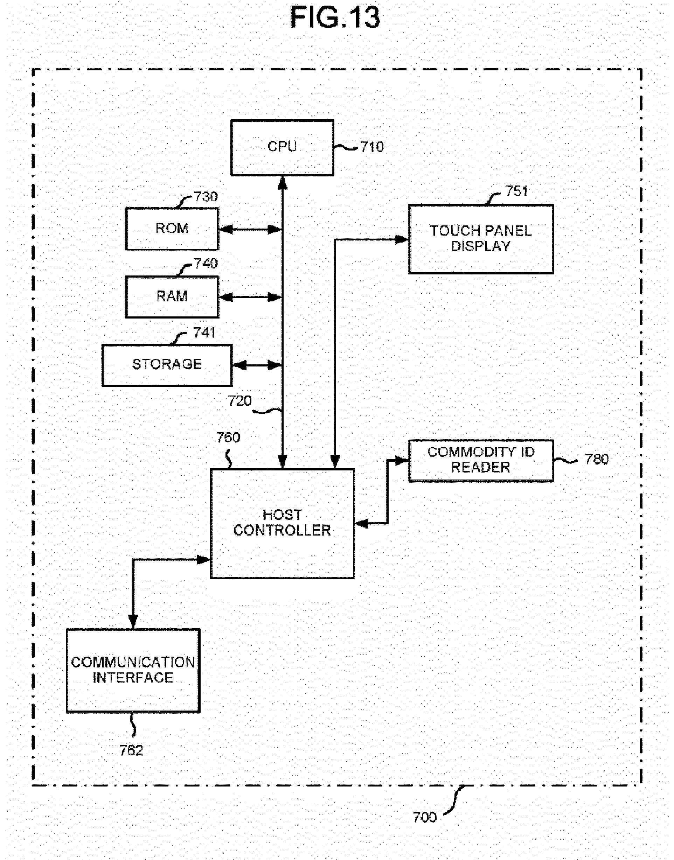

Fig. 13 is a functional block diagram of the kitchen terminal 700.

The kitchen terminal 700 is provided with a CPU 710.

The CPU 710 communicates with a ROM 730, a RAM 740, and a host controller 760 via a bus line 720.

The ROM 730 and a storage 741 store programs to be executed by the CPU 710 and data necessary for the CPU 710 to execute the programs.

The RAM 740 stores temporary data and the like when the CPU 710 executes the programs.

The CPU 710 displays an image on a touch panel display 751. The CPU 710 receives an input from the store clerk via the touch panel display 751.

The CPU 710 controls a communication interface 762 via the host controller 760 to wirelessly communicate with the access point 2 to configure the WLAN.

The CPU 710 communicates with the commodity ID reader 780 via the host controller 760 to acquire the commodity ID of the commodity ID tag attached to the tableware. The configuration of the table unit 800 is described.

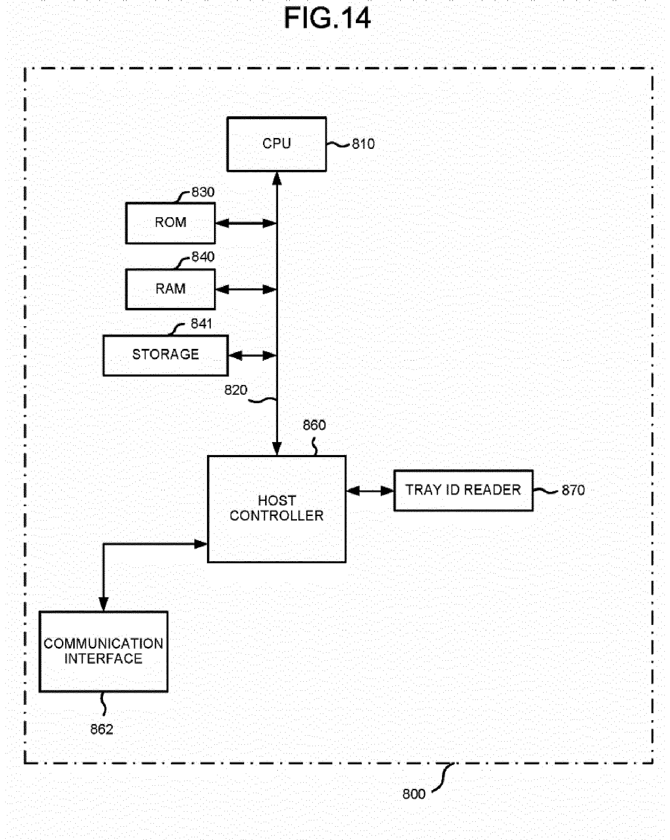

Fig. 14 is a functional block diagram of the table unit 800.

The table unit 800 is provided with a CPU 810.

The CPU 810 communicates with a ROM 830, a RAM 840 and a host controller 860 via a bus line 820.

The ROM 830 and a storage 841 store programs to be executed by the CPU 810 and data necessary for the CPU 810 to execute the programs.

The RAM 840 stores temporary data and the like when the CPU 810 executes the programs.

The CPU 810 controls a communication interface 862 via the host controller 860 to wirelessly communicate with the access point 2 to configure the WLAN.

The CPU 810 communicates with the tray ID reader 870 via the host controller 860 to acquire the tray ID of the tray ID tag attached to the tray.

The operations of the devices are described.

A processing executed by the CPU 210 of the main register 200 relating to the operation of the main register 200 is described.

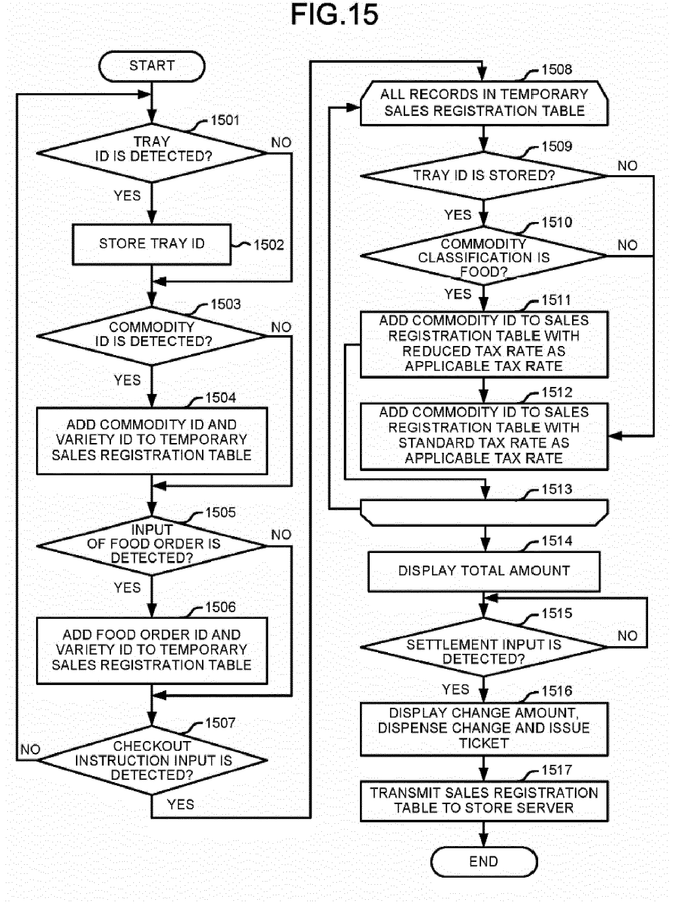

Fig. 15 is a flowchart depicting a processing executed by the CPU 210 of the main register 200.

The CPU 210 performs a loop of detecting the sales registration until a checkout instruction input is detected. In the loop, the CPU 210 monitors the input from the tray ID reader 270 to detect a tray ID (Yes in 1501), and stores the tray ID in the RAM 240 (1502).

If the CPU 210 monitors the input from the commodity ID reader 280 and detects a commodity ID (Yes in 1503), the CPU 210 adds the commodity ID to the temporary sales registration table in the RAM 240 together with a variety ID associated with the commodity ID in the commodity ID-variety table copied or decompressed on the RAM 240 from the storage 241 (1504).

If the CPU 210 monitors the input from the touch panel display for store clerk 251 or the keyboard 261 and detects that the food order is input (Yes in 1505), the CPU 210 issues the food order ID of the food order and adds the food order ID to the temporary sales registration table together with the variety ID of the ordered food selected from the variety master file copied or decompressed on the RAM 240 from the storage 241 (1506).

If the CPU 210 does not detect the input of checkout instruction from the touch panel display for store clerk 251 or the keyboard 261 (No in 1507), the CPU 210 returns to the beginning of the loop and executes the processing in 1501 again.

If the CPU 210 detects the input of the checkout instruction from the touch panel display for store clerk 251 or the keyboard 261 in 1507 (Yes in 1507), a loop of specifying the applicable tax rate for all the records in the temporary sales registration table is executed. In the loop, the CPU 210 determines whether or not the tray ID is stored in the RAM 240 (1509), and then determines whether or not the commodity classification associated with the variety ID in the variety master file copied or decompressed on the RAM 240 from the storage 241 is "food" (1510), wherein the variety ID is recorded in a record to be processed in the temporary sales registration table in the RAM 240.

If the tray ID is stored in the RAM 240 (Yes in 1509), and the commodity classification associated with the variety ID in the record to be processed in the temporary sales registration table is "food" (Yes in 1510), the CPU 210 adds, to the sales registration table in the RAM 240, the tray ID stored in the RAM 240, the food order ID or commodity ID and the variety ID in the record to be processed in the temporary sales registration table, and the reduced tax rate associated with the variety ID in the variety master file copied or decompressed on the RAM 240 from the storage 241 (1511).

If the tray ID is not stored in the RAM 240 (No in 1509), or the commodity classification associated with the variety ID in the record to be processed in the temporary sales registration table is not "food" (No in 1510), the CPU 210 adds, to the sales registration table in the RAM 240, the tray ID stored in the RAM 240, the food order ID or commodity ID and the variety ID in the record to be processed in the temporary sales registration table, and the standard tax rate associated with the variety ID in the variety master file copied or decompressed on the RAM 240 from the storage 241 (1512).

In order to specify the applicable tax rate for a next record in the temporary sales registration table as well, the CPU 210 sets the next record as a processing target and then returns to the beginning of the loop to again execute the determination in 1509 (1513).

After performing the loop of specifying the applicable tax rate for all records in the temporary sales registration table, the CPU 210 displays, as a total amount on the touch panel display for store clerk 251 and the touch panel display for customer 252, a sum of sums of all the records each obtained by adding a unit price in each record in the sales registration table in the RAM 240 to a tax amount calculated from the unit price and the applicable tax rate (1514).

The CPU 210 stands by until the input of determined deposit amount from the touch panel display for store clerk 251 or the keyboard 261 or the input of the electronic money settlement from the card reader 265 is detected (No in 1515), and if the input is detected (Yes in 1515), the CPU 210 displays a change amount on the touch panel display for store clerk 251 or the touch panel display for customer 252, controls the automatic change dispensing machine 266 to dispense the change, and controls the printer 263 to print the ticket containing the food order ID in the sales registration table in the RAM 240 (1516).

The CPU 210 transmits the contents of the sales registration table in the RAM 240 after the settlement to the store server 100 via the communication interface 262 (1517).

The CPU 210 clears the tray ID, the temporary sales registration table and the sales registration table in the RAM 240, and terminates the processing.

A processing executed by the CPU 310 of the eat-in register 300 relating to the operation of the eat-in register 300 is described.

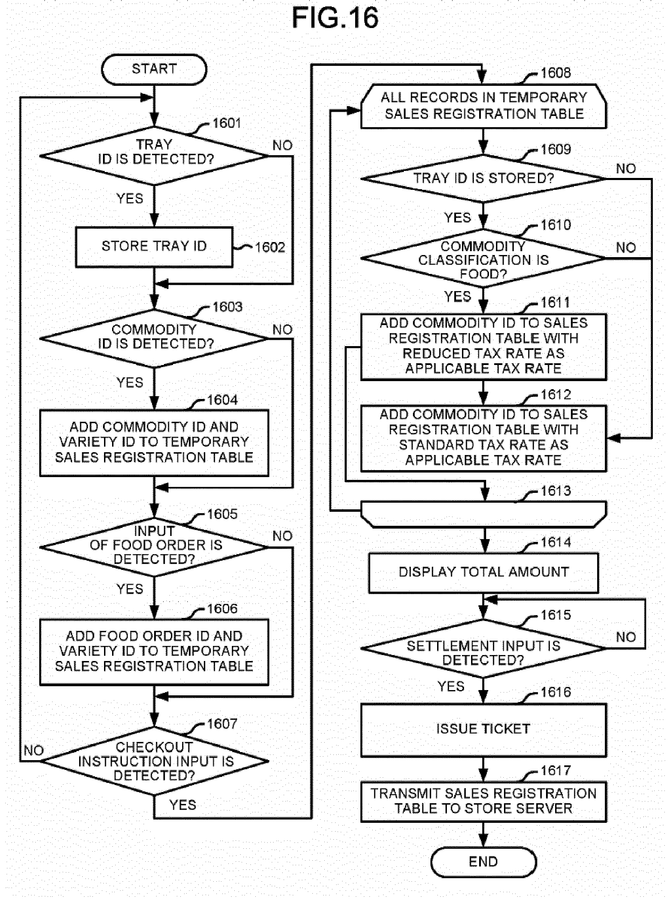

Fig. 16 is a flowchart depicting a processing executed by the CPU 310 of the eat-in register 300.

The CPU 310 performs a loop of detecting the sales registration until a checkout instruction is input. In the loop, if the CPU 310 monitors the input from the tray ID reader 370 and detects a tray ID (Yes in 1601), the CPU 310 stores the tray ID in the RAM 340 (1602).

If the CPU 310 monitors the input from the commodity ID reader 380 and detects a commodity ID (Yes in 1603), the CPU 310 adds the commodity ID to the temporary sales registration table in the RAM 340 together with the variety ID associated with the commodity ID in the commodity ID-variety table copied or decompressed on the RAM 340 from the storage 341 (1604).

If the CPU 310 monitors the input from the touch panel display 351 and detects that the food order is input (Yes in 1605), the CPU 310 issues a food order ID of the food order, and adds the food order ID to the temporary sales registration table together with the variety ID of the ordered food selected from the variety master file copied or decompressed on the RAM 340 from the storage 341 (1606).

If the CPU 310 does not detect the input of the checkout instruction from the touch panel display 351 (No in 1607), the CPU 310 returns to the beginning of the loop to execute the processing in 1601 again.

If the CPU 310 detects the input of the checkout instruction from the touch panel display 351 in 1607 (Yes in 1607), a loop of specifying the applicable tax rate for all the records in the temporary sales registration table is performed (1608 to 1613). In the loop, the CPU 310 determines whether or not the tray ID is stored in the RAM 340 (1609), and determines whether or not the commodity classification associated with the variety ID in the variety master file copied or decompressed on the RAM 340 from the storage 341 is "food" (1610), wherein the variety ID is recorded in a record to be processed in the temporary sales registration table in the RAM 340.

If the tray ID is stored in the RAM 340 (Yes in 1609), and the commodity classification associated with the variety ID in the record to be processed in the temporary sales registration table is "food" (Yes in 1610), the CPU 310 adds, to the sales registration table in the RAM 340, the tray ID stored in the RAM 340, the food order ID or commodity ID and the variety ID in the record to be processed in the temporary sales registration table, and the reduced tax rate associated with the variety ID in the variety master file copied or decompressed on the RAM 340 from the storage 341 (1611).

If the tray ID is not stored in the RAM 340 (No in 1609), or the commodity classification associated with the variety ID in the record to be processed in the temporary sales registration table is not "food" (No in 1610), the CPU 310 adds, to the sales registration table in the RAM 340, the tray ID stored in the RAM 340, the food order ID or commodity ID and the variety ID in the record to be processed in the temporary sales registration table, and the standard tax rate associated with the variety ID in the variety master file copied or decompressed on the RAM 340 from the storage 341 (1612).

In order to specify the applicable tax rate for a next record in the temporary sales registration table as well, the CPU 310 sets the next record as a processing target and then returns to the beginning of the loop to again execute the determination in 1609 (1613).

After performing the loop of specifying the applicable tax rate for all records in the temporary sales registration table, the CPU 310 displays, as a total amount on the touch panel display 351, a sum of sums of all the records each obtained by adding a unit price in each record in the sales registration table in the RAM 340 to a tax amount calculated from the unit price and the applicable tax rate (1614).

The CPU 310 stands by until the input of determined deposit amount from the touch panel display 351 or the input of the electronic money settlement from the card reader 365 is detected (No in 1615), and if the input is detected (Yes in 1615), the CPU 310 controls the printer 363 to print a ticket containing the food order ID in the sales registration table in the RAM 340 (1616).

The CPU 310 transmits the contents of the sales registration table in the RAM 340 after the settlement to the store server 100 via the communication interface 362 (1617).

The CPU 310 clears the tray ID, the temporary sales registration table and the sales registration table in the RAM 340, and terminates the processing.

A processing executed by the CPU 410 of the eat-in gate 400 relating to the operation of the eat-in gate 400 is described.

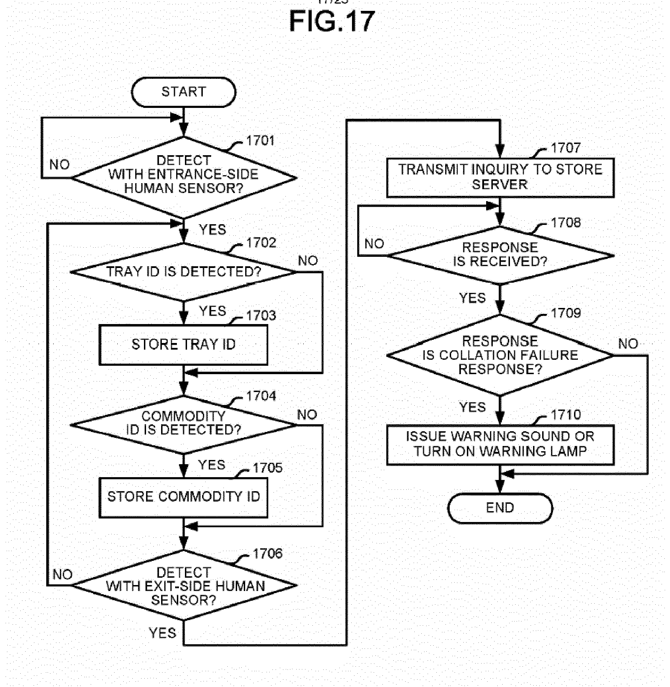

Fig. 17 is a flowchart depicting a processing executed by the CPU 410 of the eat-in gate 400.

The CPU 410 stands by until the entrance-side human sensor 463 detects a customer (No in 1701), and if a customer is detected (Yes in 1701), the CPU 410 performs a loop of scanning a tray ID and a commodity ID. In the loop, if the CPU 410 detects a tray ID with the tray ID antenna 470 (Yes in 1702), the CPU 410 stores the tray ID in the RAM 440 (1703). If the CPU 410 detects a commodity ID with the commodity ID antenna 480 (Yes in 1704), the CPU 410 stores the commodity ID in the RAM 440 (1705). The CPU 410 returns to the beginning of the scanning loop to execute the processing in 1702 again until the exit-side human sensor 464 detects the customer (No in 1706). If the exit-side human sensor 464 detects the customer (Yes in 1706), the CPU 410 stops the scanning loop and transmits an eat-in inquiry including the tray ID and the commodity ID stored in the RAM 440 in the scanning loop to the store server 100 via the communication interface 462 (1707).

The CPU 410 stands by until the response is received from the store server 100 (No in 1708).

If the CPU 410 receives the response from the store server 100 (Yes in 1708), and the response is the collation failure response (Yes in 1709), the CPU 410 controls the speaker 465 to emit sound and turns on the lamp 466 (1710).

A processing executed by the CPU 510 of the drink vendor 500 is described relating to the operation of the drink vendor 500.

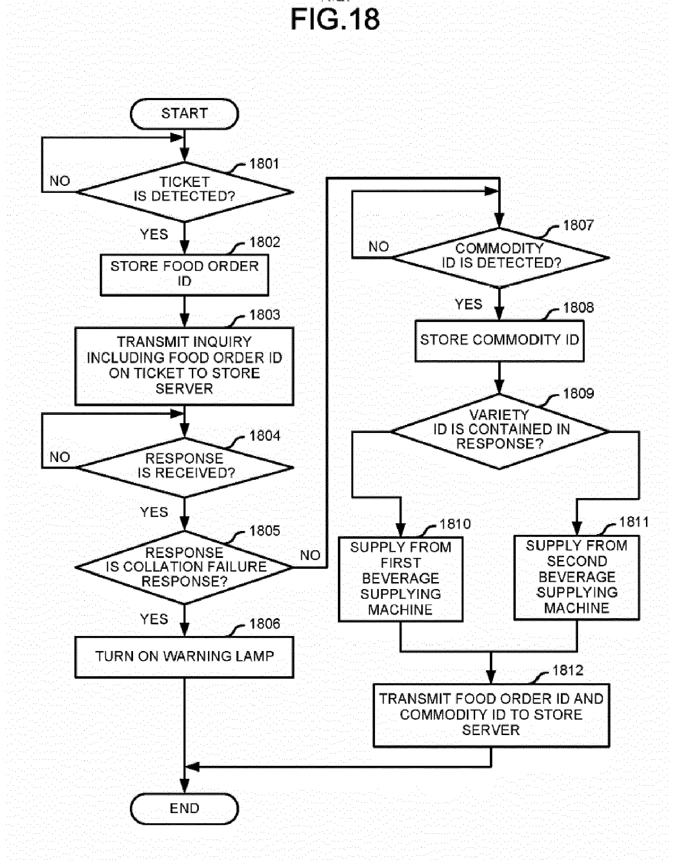

Fig. 18 is a flowchart depicting a processing executed by the CPU 510 of the drink vendor 500.

The CPU 510 stands by until a ticket is detected by the scanner 563 (No in 1801). If the ticket is detected (Yes in 1801), the CPU 510 stores the food order ID on the ticket in the RAM 540 (1802), and transmits an order inquiry including the food order ID to the store server (1803).

The CPU 510 stands by until a response is received from the store server 100 (No in 1804).

If the CPU 510 receives the response from the store server 100 (Yes in 1804), and the response is the collation failure response (Yes in 1805), the CPU 510 turns on the lamp 564 (1806).

If the response is not the collation failure response (No in 1805), the CPU 510 stands by until the commodity ID reader 580 detects a commodity ID (No in 1807).

If the commodity ID is detected by the commodity ID reader 580 (Yes in 1807), the CPU 510 stores the commodity ID in the RAM 540 (1808).

The CPU 510 controls the beverage supplying machine associated with the variety ID contained in the response from the store server 100 to discharge drink (1809). For example, if the variety ID included in the response from the store server 100 is "ITM 03", the CPU 510 controls the first beverage supplying machine 565 to discharge the iced coffee since the first beverage supplying machine 565 is associated with the variety ID "ITM 03" in the drink variety table copied or decompressed on the RAM 540 from the storage 541 (1810).

If the variety ID included in the response from the store server 100 is "ITM 04", the CPU 510 controls the second beverage supplying machine 566 to discharge the hot coffee since the second beverage supplying machine 566 is associated with the variety ID "ITM 04" in the drink variety table copied or decompressed on the RAM 540 from the storage 541 (1811).

The CPU 510 transmits the food order ID and the commodity ID stored in the RAM 540 to the store server 100 (1812).

A processing executed by the CPU 610 of the order terminal 600 is described relating to the operation of the order terminal 600.

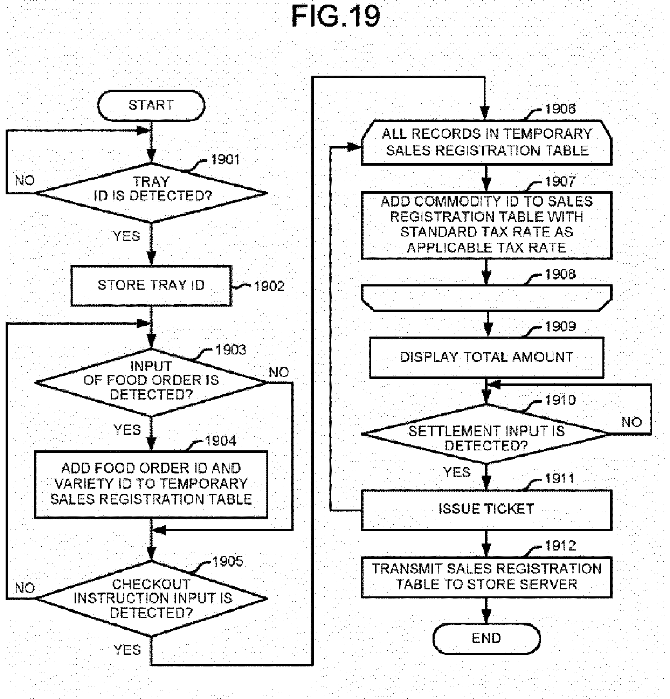

Fig. 19 is a flowchart depicting a processing executed by the CPU 610 of the order terminal 600.

The CPU 610 performs a tray standby loop until a tray ID is detected. In the loop, if the CPU 610 monitors the input from the tray ID reader 670 and detects a tray ID (Yes in 1901), the CPU 610 stores the tray ID in the RAM 640 (1902).

The CPU 610 returns to the beginning of the loop to execute the processing in 1901 again until the tray ID is detected (No in 1901).

After the CPU 610 stores the tray ID in the RAM 640, the CPU 610 performs a loop of detecting the sales registration until an input of a checkout instruction is detected. In the loop, if the CPU 610 monitors the input from the touch panel display 652 and detects that a food order is input (Yes in 1903), the CPU 610 issues a food order ID of the food order, and adds the food order ID to the temporary sales registration table together with the variety ID of the ordered food selected from the variety master file copied or decompressed on the RAM 640 from the storage 641 (1904).

If the CPU 610 does not detect the input of the checkout instruction from the touch panel display 652 (No in 1905), the CPU 610 returns to the beginning of the loop to execute the processing in 1903 again.

In 1905, if the CPU 610 detects the input of the checkout instruction from the touch panel display 652 (Yes in 1905), the CPU 610 executes a loop of specifying the applicable tax rate for all records in the temporary sales registration table (1906 to 1908).

In the loop, the CPU 610 adds, to the sales registration table in the RAM 640, the tray ID stored in the RAM 640, the food order ID or commodity ID and the variety ID in the record to be processed in the temporary sales registration table, and the standard tax rate associated with the variety ID in the variety master file copied or decompressed on the RAM 640 from the storage 641 (1907).

In order to specify the applicable tax rate for a next record in the temporary sales registration table as well, the CPU 610 sets the next record as a processing target and then returns to the beginning of the loop to again execute the processing in 1907 (1908). After performing the loop of specifying the applicable tax rate for all records in the temporary sales registration table, the CPU 610 displays, as a total amount on the touch panel display 652, a sum of sums of all the records each obtained by adding a unit price in each record in the sales registration table in the RAM 640 to a tax amount calculated from the unit price and the applicable tax rate (1909).

The CPU 610 stands by until the input of determined deposit amount from the touch panel display 652 or the input of the electronic money settlement from the card reader 665 is detected (No in 1910), and if the input is detected (Yes in 1910), the CPU 610 controls the printer 663 to print a ticket containing the food order ID in the sales registration table in the RAM 640 (1911).

The CPU 610 transmits the contents of the sales registration table in the RAM 640 after the settlement to the store server 100 via the communication interface 662 (1912).

The CPU 610 clears the tray ID, the temporary sales registration table and the sales registration table in the RAM 640, and terminates the processing.

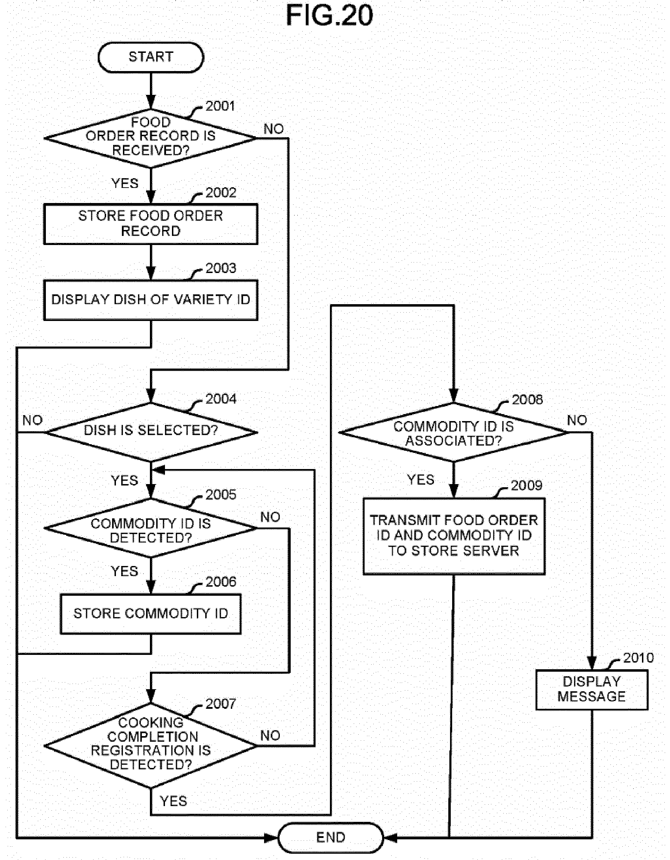

A processing executed by the CPU 710 of the kitchen terminal 700 is described relating to the operation of the kitchen terminal 700. Fig. 20 is a flowchart depicting a processing executed by the CPU 710 of the kitchen terminal 700.

If a food order record including the food order ID and the variety ID is received from the store server 100 via the communication interface 762 (Yes in 2001), the CPU 710 adds the food order record to the kitchen table in the RAM 740 (2002), and displays the dish corresponding to the variety ID for each food order record on the touch panel display 751 (2003).

If the CPU 710 detects an input for selecting a dish on the touch panel display 751 (Yes in 2004), the CPU 710 stands by until the commodity ID is detected (2005) or until the cooking completion registration is detected (2007).

If the commodity ID is detected by the commodity ID reader 780 (Yes in 2005), the CPU 710 stores the commodity ID in association with a record in the kitchen table in the RAM 740 which corresponds to the food order record of the dish selected on the touch panel display 751 (2006).

If the CPU 710 detects the input of the cooking completion registration on the touch panel display 751 (Yes in 2007), and the commodity ID is stored in association with the record in the kitchen table in the RAM 740 which corresponds to the food order record of the dish selected on the touch panel display 751 (Yes in 2008), the CPU 710 transmits, to the store server 100 via the communication interface 762, the record in the kitchen table including the food order ID and the commodity ID, which corresponds to the food order record of the dish selected on the touch panel display 751 (2009).

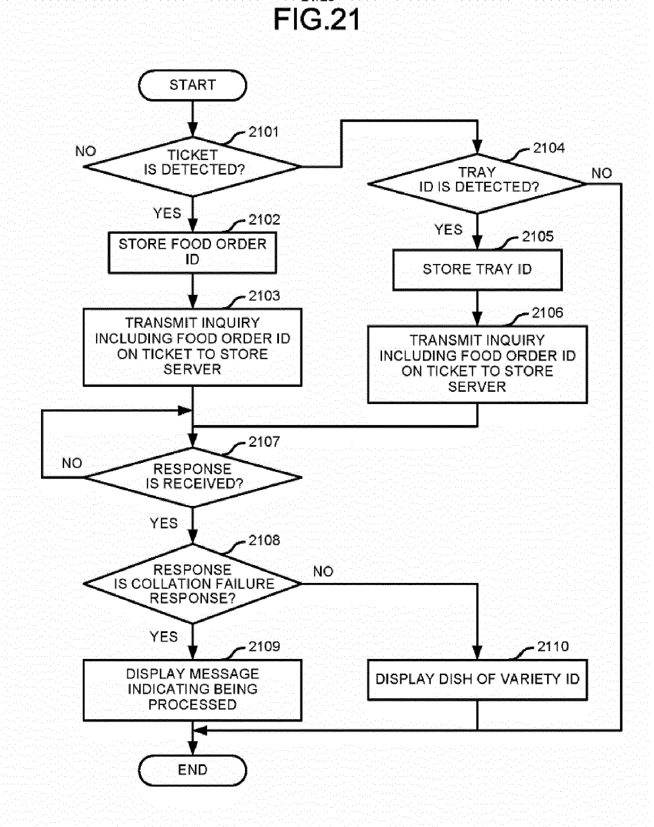

If the commodity ID is not associated with the record in the kitchen table in the RAM 740 which corresponds to the food order record of the dish selected on the touch panel display 751 (No in 2008), the CPU 710 displays a message for instructing the store clerk to read the commodity ID of the tableware on the touch panel display 751 (2010). A processing executed by the CPU 210 of the main register 200 is described relating to the operation of the kitchen terminal 700. Fig. 21 is a flowchart depicting a processing executed by the CPU 210 of the main register 200.

If the scanner 267 detects a ticket (Yes in 2101), the CPU 210 stores the food order ID on the ticket in the RAM 240 (2102), and transmits an order inquiry including the food order ID to the store server (2103).

If the tray ID is detected by the tray ID reader 270 (Yes in 2104), the CPU 210 stores the tray ID in the RAM 240 (2105), and transmits an order inquiry including the tray ID to the store server (2106).

The CPU 210 stands by until a response is received from the store server 100 (No in 2107). If the response is received from the store server 100 (Yes in 2107) and the response is the collation failure response (Yes in 2108), the CPU 210 displays a message indicating that the dish is being cooked on the touch panel display for store clerk 251 and the touch panel display for customer 252 (2109).

If the response is not the collation failure response (No in 2108), the CPU 210 displays the variety name associated with the variety ID included in the response in the variety master file copied or decompressed on the RAM 240 from the storage 241 on the touch panel display for store clerk 251 and the touch panel display for customer 252 (2110).

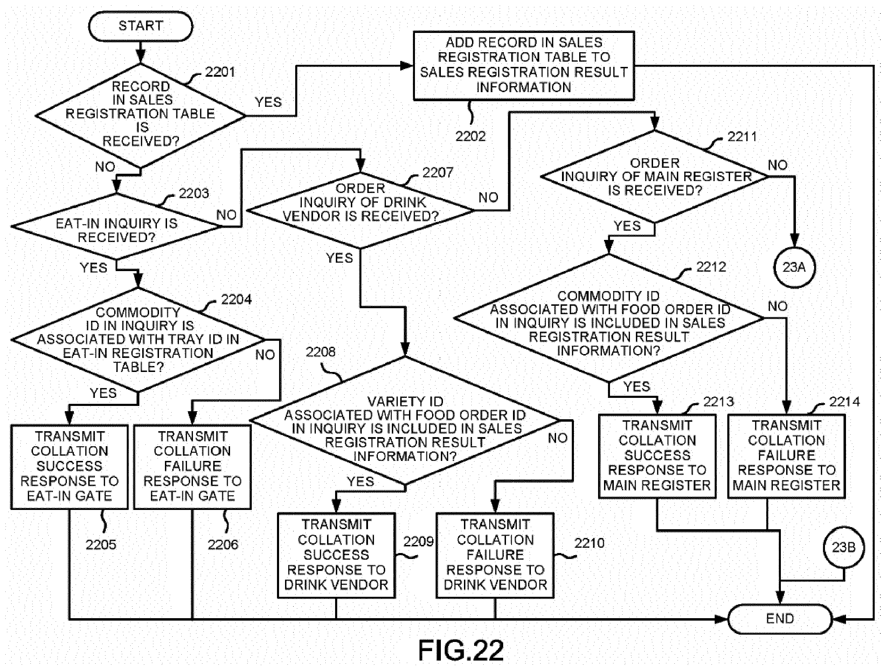

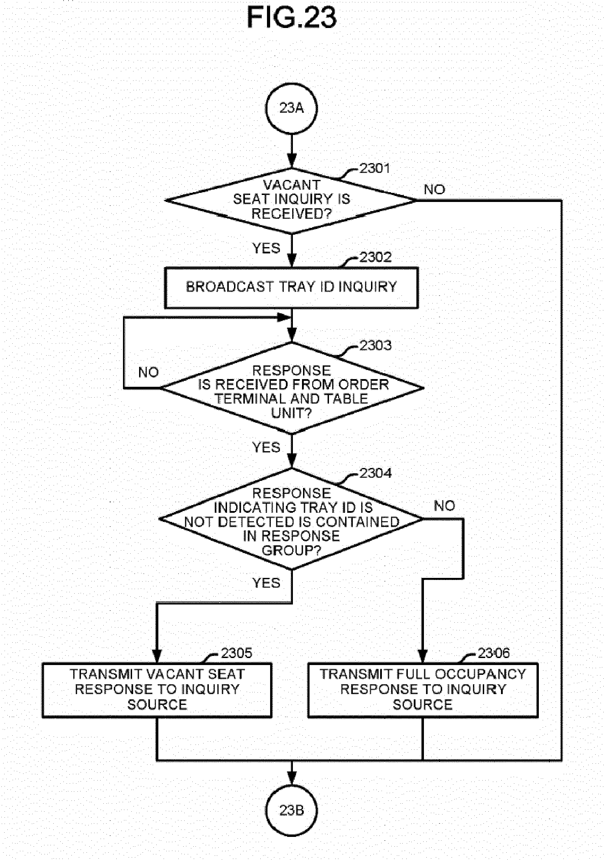

A processing executed by the CPU 110 of the store server 100 is described. Fig. 22 and Fig. 23 are flowcharts depicting the processing executed by the CPU 110 of the store server 100.

If the record in the sales registration table is received via the communication interface 170 (Yes in 2201), the CPU 110 adds the received record in the sales registration table to the sales registration result information stored in the storage 141 (2202).

If the eat-in inquiry is received via the communication interface 170 (Yes in 2203), the CPU 110 performs collation for determining whether or not a commodity ID group included in the eat-in inquiry is associated with the tray ID in the eat-in registration table stored in the storage 141 (2204).

If the commodity IDs in the commodity ID group included in the eat-in inquiry are all associated with the tray ID in the eat-in registration table in the storage 141 (Yes in 2204), the CPU 110 transmits the collation success response to the eat-in gate 400 (2205).

If there is a commodity ID, which is not associated with the tray ID in the eat-in registration table in the storage 141, in the commodity ID group included in the eat-in inquiry (No in 2204), the CPU 110 transmits the collation failure response to the eat-in gate 400 (2206).

If the order inquiry is received from the drink vendor 500 via the communication interface 170 (Yes in 2207), the CPU 110 performs collation for determining whether or not the food order ID included in the order inquiry is included in the sales registration result information in the storage 141 (2208).

If the food order ID included in the order inquiry is included in a record in the sales registration result information in the storage 141 (Yes in 2208), the CPU 110 transmits the collation success response including the variety ID of the record to drink vendor 500 (2209).

If the food order ID included in the order inquiry is not included in the sales registration result information in the storage 141 (No in 2208), the CPU 110 transmits the collation failure response to the drink vendor 500 (2210).

If the CPU 110 receives the order inquiry from the main register 200 via the communication interface 170 (Yes in 2211), the CPU 110 performs collation for determining whether or not the food order ID included in the order inquiry is associated with the commodity ID in the sales registration result information in the storage 141 (2212).

If there is a record in which the food order ID included in the order inquiry is associated with the commodity ID in the sales registration result information in the storage 141 (Yes in 2212), the CPU 110 transmits the collation success response including the commodity ID of the record to the main register 200 (2213).

If there is no record in which the food order ID included in the order inquiry is associated with the commodity ID in the sales registration result information in the storage 141 (No in 2212), the CPU 110 transmits the collation failure response to the main register 200 (2214).

If a vacant seat inquiry is received via the communication interface 170 (Yes in 2301), the CPU 110 broadcasts a tray ID inquiry via the communication interface 170 (2302). The CPU 110 receives a response from the order terminal 600 and the table unit 800 via the communication interface 170 (2303).

If there is a response indicating that the tray ID cannot be detected in the received response group (Yes in 2304), the CPU 110 transmits a vacant seat response to a transmission source of the vacant seat inquiry via the communication interface 170 (2305).

If there is no response indicating that the tray ID cannot be detected in the received response group (No in 2304), the CPU 110 transmits a full occupancy response to the transmission source of the vacant seat inquiry via the communication interface 170 (2306).

As described above, an ID for differentiating whether the settlement of food is performed at the standard tax rate or the reduced tax rate depending on whether the ID is associated with the commodity ID is the tray ID of the tray ID tag attached to the tray on which the food is placed. Since the customer generally brings food on the tray when entering the eat-in space, the above embodiment is advantageous to optimize the applicable tax rate without giving the customer a big discomfort.

However, it is considered that there may be situations in which it is inconvenient to use a tray on which the food is placed, such as a case in which the tray is large, a case in which the tray is expensive, and the like. In such a case, instead of attaching the ID tag corresponding to the ID for differentiation to the tray, the ID tag may be attached to a small card, or the ID tag may be attached to a seal and the seal is pasted on the commodity, the tableware or the customer, which can also achieve the effect. Alternatively, a MAC address (Media Access Control address) of a portable terminal 910 or a software ID such as an ID unique to a subscriber may be used instead of the tray ID. In other words, an ID of a means carried by the customer other the commodity may be used instead of the tray ID.

As described above, programs for realizing the functions of the invention are recorded in advance in the ROM which is a program storage section in the apparatus. However, it is not limited thereto, and for example, the same programs may be downloaded from a network to the apparatus. Alternatively, the same programs recorded on a recording medium may be installed in the apparatus. The recording medium may be in any form as long as it can store programs such as a CD-ROM (Compact Disc Read-Only Memory), a memory card, etc., and is readable by the apparatus. The functions obtained by installing or downloading the programs may be realized by cooperation of the programs with an OS (operating system) or the like in the apparatus.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A checkout system, comprising a gate, a server and a commodity ID scanner configured to detect commodity IDs of individual commodities one by one wherein:
the gate further comprises;
a first communication interface configured to transmit an inquiry about the commodity ID and to receive a response to the inquiry; and
a warning device configured to issue a warning when the response indicates that a commodity identified by the commodity ID is settled at a reduced tax rate, and not to issue a warning when the response indicates that a commodity identified by the commodity ID is settled at a standard tax rate, and
the server further comprises
a storage configured to store whether the commodity is settled at the standard tax rate or the reduced tax rate for each commodity ID; and
a second communication interface configured to receive the inquiry via the first communication interface and to transmit the response indicating whether it is recorded that the commodity identified by the commodity ID included in the inquiry is settled at the standard tax rate or it is recorded that the commodity is settled at the reduced tax rate in the storage.

2. The checkout system according to claim 1, further comprising a checkout terminal, wherein
the commodity ID scanner is included in the checkout terminal;the checkout terminal further comprises
an ID scanner configured to detect an ID of a means carried by the customer other than the commodity;
a CPU configured to settle a commodity whose commodity ID is detected by the commodity ID scanner at the standard tax rate if the ID of the means carried by the customer other than the commodity is detected by the ID scanner, and to settle a commodity whose commodity ID is detected by the commodity ID scanner at the reduced tax rate if the ID of the means that the customer carries other than the commodity is not detected by the ID scanner; and
a third communication interface configured to transmit whether the commodity whose commodity ID is detected by the commodity ID scanner is settled at the standard tax rate or at the reduced tax rate to the server.

3. The checkout system according to claim 2, wherein
even in a case in which the ID scanner does not detect the ID of the means carried by the customer other than the commodity, if the commodity detected by the commodity ID scanner is not food, the CPU of the checkout terminal settles the commodity at the standard tax rate.

4. The checkout system according to claim 2 or 3, wherein
the third communication interface of the checkout terminal transmits the ID of the means carried by the customer other than the commodity in association with the commodity ID of the commodity detected by the commodity ID scanner to the server.

5. The checkout system according to any one of claims 2 to 4, wherein
the means carried by the customer other than the commodity is a tray on which the commodity is placed.

6. A checkout method for a checkout system comprising a gate, a commodity ID scanner and a server, the method comprising:
detecting, by the commodity ID scanner, commodity IDs of individual commodities one by one;
transmitting, by the gate, an inquiry about the commodity ID
receiving, by the gate, a response to the inquiry;
issuing, by the gate, a warning when the response indicates that a commodity identified by the commodity ID is settled at a reduced tax rate,
not issuing, by the gate, a warning when the response indicates that a commodity identified by the commodity ID is settled at a standard tax rate,
storing, by the server, whether the commodity is settled at the standard tax rate or the reduced tax rate for each commodity ID,
receiving , by the server, the inquiry via the gate; and
transmitting the response indicating whether it is recorded that the commodity identified by the commodity ID included in the inquiry is settled at the standard tax rate or it is recorded that the commodity is settled at the reduced tax rate in the storage.

7. The checkout method according to claim 6, wherein the system further comprises a checkout terminal including the commodity ID scanner, the method further comprising:
detecting, by the checkout terminal, an ID of a means carried by the customer other than the commodity;
performing a settlement, by the checkout terminal, a commodity whose commodity ID is detected by the commodity ID scanner at the standard tax rate if the ID of the means carried by the customer other than the commodity is detected by the checkout terminal;
performing a settlement, by the checkout terminal, a commodity whose commodity ID is detected by the commodity ID scanner at the reduced tax rate if the ID of the means that the customer carries other than the commodity is not detected by the checkout terminal; and
transmitting, by the checkout terminal, whether the commodity whose commodity ID is detected by the commodity ID scanner is settled at the standard tax rate or at the reduced tax rate to the server.

8. The checkout method according to claim 7, further comprising:
even in a case in which the checkout terminal does not detect the ID of the means carried by the customer other than the commodity, if the commodity detected by the commodity ID scanner is not food, performing the settlement, by the checkout terminal, at the standard tax rate.

9. The checkout method according to claim 7 or 8, further comprising:
transmitting, by the checkout terminal, the ID of the means carried by the customer other than the commodity in association with the commodity ID of the commodity detected by the commodity ID scanner to the server.

10. A non-transitory computer readable medium storing a program causing a computer to execute the method according to any one of claim 6 to 9.
